(19) Europäisches Patentamt / European Patent Office / Office européen des brevets

(11) **EP 3 476 958 A1**

(12) **EUROPEAN PATENT APPLICATION**
published in accordance with Art. 153(4) EPC

(43) Date of publication:
**01.05.2019 Bulletin 2019/18**

(51) Int Cl.:
*C22C 9/06* (2006.01)   *C22C 9/00* (2006.01)
*C22C 9/02* (2006.01)   *C22C 9/04* (2006.01)
*C22C 9/05* (2006.01)   *H01B 1/02* (2006.01)
*B22D 11/00* (2006.01)   *B22D 11/06* (2006.01)
*B22D 11/108* (2006.01)   *B22D 11/12* (2006.01)
*B22D 35/00* (2006.01)   *C22F 1/00* (2006.01)
*C22F 1/08* (2006.01)

(21) Application number: 17815506.5

(22) Date of filing: 23.06.2017

(86) International application number:
**PCT/JP2017/023164**

(87) International publication number:
**WO 2017/222041 (28.12.2017 Gazette 2017/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 23.06.2016   JP 2016124661
12.06.2017   JP 2017115427

(71) Applicants:
• **Mitsubishi Materials Corporation**
**Chiyoda-ku**
**Tokyo 100-8117 (JP)**
• **Mitsubishi Shindoh Co., Ltd.**
**Tokyo 100-0005 (JP)**

(72) Inventors:
• **ENAMI Yuusuke**
**Kitamoto-shi**
**Saitama 364-0022 (JP)**
• **SAKAMOTO Toshio**
**Kitamoto-shi**
**Saitama 364-0022 (JP)**
• **NAKAMOTO Hitoshi**
**Tokyo 100-8117 (JP)**
• **OISHI Keiichiro**
**Sakai-shi**
**Osaka 590-0906 (JP)**
• **SUGAHARA Atsushi**
**Kokubunji-shi**
**Tokyo 185-8540 (JP)**
• **YAMASHITA Chikara**
**Kokubunji-shi**
**Tokyo 185-8540 (JP)**
• **OHARA Takuya**
**Kokubunji-shi**
**Tokyo 185-8540 (JP)**

(74) Representative: **Hoffmann Eitle**
**Patent- und Rechtsanwälte PartmbB**
**Arabellastraße 30**
**81925 München (DE)**

(54) **COPPER ALLOY, COPPER ALLOY INGOT, COPPER ALLOY SOLUTION FORMING MATERIAL, COPPER ALLOY TROLLEY WIRE AND METHOD FOR PRODUCING COPPER ALLOY TROLLEY WIRE**

(57)   A copper alloy has a composition including 0.05 mass% or more and 0.70 mass% or less of Co; 0.02 mass% or more and 0.20 mass% or less of P; 0.005 mass% or more and 0.70 mass% or less of Sn, one or more of B, Cr, and Zr; and furthermore, a Cu balance containing inevitable impurities, wherein X, Y, and Z satisfy the following Expression (1): $1 \leq (X/5)+(Y/50)+(Z/100)$ and Expression (2): $X+Y+Z \leq 1,000$, in case where an amount of B is represented by X (massppm), an amount of Cr is represented by Y (massppm), and an amount of Zr is represented by Z (massppm).

EP 3 476 958 A1

# FIG. 9

**Description**

Technical Field

The present invention relates to a precipitation hardening-type copper alloy containing Co, P, and Sn which is used for, for example, a wire in a vehicle or a device, a trolley wire, a wire for a robot, a wire for an aircraft, and the like, a copper alloy ingot, a solid solution material of copper alloy, and a copper alloy trolley wire, a method of manufacturing a copper alloy trolley wire.

Priority is claimed on Japanese Patent Application No. 2016-124661, filed June 23, 2016, and Japanese Patent Application No. 2017-115427, filed June 12, 2017, the contents of which are incorporated herein by reference.

Background Art

In the related art, for example, as described in Patent Document 1 and 2, as an electrical wire for wires in a vehicle or a device, an electrical wire obtained by coating an electrical wire conductor, which is formed by twisting a plurality of copper wires together, with an insulating coat is provided. In addition, for efficient wiring or the like, a wire harness obtained by bundling a plurality of the above-described electrical wires is provided.

In recent years, from the viewpoint of environmental protection, there has been a strong demand for a decrease in the weight of a vehicle frame in order to reduce the amount of carbon dioxide discharged from a vehicle. Meanwhile, as not only the computerization of a vehicle but also the development of a hybrid vehicle or an electric vehicle are making progress, and the number of electrical components used in a vehicle is increasing at an accelerating rate. Therefore, the amount of wire harnesses used to connect these components is estimated to further increase in the future, and there is a demand for a decrease in the weight of the wire harness.

Here, as means for decreasing the weight of the wire harness, an attempt has been made to decrease the diameters of electrical wires and copper wires. In addition, the decrease in the diameters of an electrical wire conductor and a copper wire decreases not only the weight but also the size of the wire harness, and thus there is another advantage that the wiring space can be effectively used.

In addition, a trolley wire which is used for an electric railroad vehicle or the like is constituted to slide into contact with a power collection device such as a pantograph and feed power to an electric railroad vehicle or the like. In order to obtain favorable power collection performance such as small line separation from the pantograph, the fluctuation propagation speed of the trolley wire needs to be sufficiently faster than the travelling speed. The fluctuation propagation speed of the trolley wire is proportional to the square root of a tensile force being exerted, and thus, in order to improve the fluctuation propagation speed, a high-strength trolley wire is required. In addition, the trolley wire is demanded to be excellent in terms of electrical conductivity, wear resistance, and fatigue characteristics.

In recent years, the travelling speed of electric railroad vehicles has been increasing; however, when, in a high-speed railway such as Shinkansen, the travelling speed of an electric railroad vehicle becomes faster than the propagation speed of a wave generated in an overhead wire such as a trolley wire, the contact between the power collection device such as the pantograph and the trolley wire becomes unstable and thus there is a concern that it may become impossible to stably feed power.

Here, since it becomes possible to increase the propagation speed of a wave in the trolley wire by increasing the overhead wire tension of the trolley wire, there is a demand for a trolley wire having a higher strength than before.

As a copper alloy wire made of a copper alloy having a high strength and a high electrical conductivity which satisfy the above-described demanded characteristics, for example, as disclosed in Patent Document 1 to 3, copper alloy wires containing Co, P, and Sn have been proposed. In these copper alloy wires, it becomes possible to improve the strength while ensuring the electrical conductivity by precipitating a complex of Co and P in the matrix of copper.

In addition, Patent Document 4 proposes a PHC trolley wire developed for high-speed travelling. This PHC trolley wire is constituted of a copper alloy containing Cr, Zr, and Sn and is excellent in terms of strength and electrical conductivity.

Meanwhile, in a case in which the above-described copper alloy wire containing Co, P, and Sn described in Patent Document 1 to 3 and the copper alloy trolley wire described in Patent Document 4 are manufactured, a method is carried out in which an ingot having a large sectional area called a billet is produced, the billet is hot-extruded through reheating, and then a wire drawing process or the like is further carried out. However, in a case in which a copper alloy is manufactured by carrying out hot extrusion after the production of an ingot having a large sectional area, the length of the copper alloy to be obtained is limited by the size of the ingot, and it has not been possible to obtain a long copper alloy wire (copper alloy trolley wire). In addition, there has been another problem of poor production efficiency.

Therefore, for example, a method has been proposed in which a copper alloy wire is manufactured using a continuous casting rolling method in which a belt-wheel type continuous casting apparatus or the like is used. In this case, since casting and rolling are continuously carried out, the production efficiency is high and it becomes possible to obtain a long copper alloy wire.

In addition, another method has also been proposed in which a continuous cast wire rod is manufactured using an upward continuous caster, a transverse continuous caster, and a hot top continuous caster, and the continuous cast wire rod is directly cold-worked without being reheated, thereby manufacturing a copper alloy wire.

However, there has been a tendency in the copper alloy wire manufactured using the continuous casting rolling method in which a belt-wheel type continuous casting apparatus or the like is used and the copper alloy wire manufactured by directly cold working a continuous cast wire rod without reheating the continuous cast wire for the strength to become lower compared with the copper alloy wire manufactured using the manufacturing method including the hot extrusion step of hot-extruding a billet. Therefore, in order to ensure the strength, it is necessary to manufacture a copper alloy wire using the manufacturing method including the hot extrusion step, and it has not been possible to efficiently produce high-strength copper.

Here, as a result of intensive studies, the present inventors clarified that, in a copper alloy wire manufactured using a continuous casting rolling method, Co and P more significantly segregate than a copper alloy wire manufactured using a manufacturing method including a hot extrusion step. Therefore, Patent Document 5 proposes a technique for suppressing the segregation of Co and P and improving the tensile strength and the electrical conductivity by specifying the ratio between Co and P. In addition, Patent Document 6 discloses that a copper alloy trolley wire which is excellent in terms of strength, heat resistance, electrical conductivity, and elongation is manufactured using a continuous casting rolling method.

Citation List

Patent Literature

[Patent Document 1] Japanese Unexamined Patent Application, First Publication No. 2010-212164
[Patent Document 2] Republished Japanese Translation No. 2009/107586 of the PCT International Publication for Patent Applications
[Patent Document 3] Republished Japanese Translation No. 2009/119222 of the PCT International Publication for Patent Applications
[Patent Document 4] Japanese Unexamined Patent Application, First Publication No. H08-157985
[Patent Document 5] Japanese Patent No. 5773015
[Patent Document 6] Japanese Patent No. 6027807

Summary of Invention

Technical Problem

However, in Patent Document 5, the segregation of Co and P is suppressed by specifying the ratio between Co and P which are the main components; however, in order to suppress the segregation, it is also effective to carry out a heat solution treatment on a continuous-cast wire rod manufactured using a continuous casting rolling method or a continuous casting method. In addition, in a copper alloy ingot such as a billet, it is also preferable to carry out a sufficient heat solution treatment in order to suppress the segregation of Co and P.

However, in a case in which a heat solution treatment is carried out on a continuous-cast wire rod or a copper alloy ingot made of the above-described copper alloy containing Co, P, and Sn, there has been a problem in that crystal grain diameters coarsen and the workability significantly degrades after the heat solution treatment. In addition, there is another problem in that the continuous-cast wire rod or the copper alloy ingot embrittles at a high temperature and thus the elongation degrades and breaking is likely to be generated.

In addition, in a trolley wire being used for an electric railroad vehicle or the like, the speed of the electric railroad vehicle has been further increased and become faster than in the related art, and excellent wear characteristics and excellent fatigue characteristics are demanded. Here, in the copper alloy trolley wire disclosed in Patent Document 6, there has been a problem in that the crystal grain diameters coarsen during the heat solution treatment and the wear characteristics and the fatigue characteristics do not sufficiently improve as described above.

The present invention has been made in consideration of the above-described circumstances, and an object of the present invention is to provide a copper alloy containing Co, P, and Sn which is capable of suppressing the coarsening of the crystal grain diameters even in a case in which a heat solution treatment is carried out, is excellent in terms of workability and high-temperature elongation, and is excellent in terms of strength and electrical conductivity, a copper alloy ingot, a solid solution material of copper alloy, and a copper alloy trolley wire which is excellent in terms of wear characteristics and fatigue characteristics and a method of manufacturing a copper alloy trolley wire.

Solution to Problem

In order to achieve the above-described object, a copper alloy according to an aspect of the present invention (hereinafter, referred to as "the copper alloy of the present invention") having a composition includes: 0.05 mass% or more and 0.70 mass% or less of Co, 0.02 mass% or more and 0.20 mass% or less of P, 0.005 mass% or more and 0.70 mass% or less of Sn, one or more of B, Cr, and Zr; and a Cu balance containing inevitable impurities, wherein X, Y, and Z satisfy the following Expressions (1) and (2);

$$\text{Expression (1): } 1 \leq (X/5)+(Y/50)+(Z/100),$$

$$\text{Expression (2): } X+Y+Z \leq 1{,}000,$$

the amount of B is represented by X (massppm), the amount of Cr is represented by Y (massppm), and the amount of Zr is represented by Z (massppm).

In the copper alloy having the above-described constitution, any one or more of B, Cr, and Zr are included, and, when the amount of B is represented by X (massppm), the amount of Cr is represented by Y (massppm), and the amount of Zr is represented by Z (massppm), Expression (1) is satisfied, and thus, even in a case in which the copper alloy is heated and held at a high temperature, the coarsening of the crystal grain diameters is suppressed due to the action of these elements, and the workability and the high-temperature elongation are excellent. In addition, it becomes possible to carry out a sufficient heat solution treatment, precipitates can be finely and uniformly dispersed by the subsequent aging heat treatment, and it is possible to improve the strength and the electrical conductivity.

Meanwhile, the contents of B, Cr, and Zr satisfy Expression (2), and thus it is possible to suppress the degradation of the castability or the generation of casting breaking due to the elements of B, Cr, and Zr.

Here, in the copper alloy of the present invention, X and Y preferably satisfy the following Expressions (3) and (4);

$$\text{Expression (3): } 1 \leq (2X/5)+(2Y/50),$$

$$\text{Expression (4): } Y<400.$$

In this case, Expression (3) is satisfied, and thus, even in a case in which the copper alloy is heated and held at a high temperature, the coarsening of the crystal grain diameters can be further suppressed. In addition, Expression (4) is satisfied, and thus it is possible to further suppress the degradation of the castability or the generation of casting breaking.

In addition, in the copper alloy of the present invention, the amount of B may be in a range of 5 massppm or more and 1,000 massppm or less.

Even in a case in which, out of B, Cr, and Zr, only B is intentionally added to the copper alloy, the amount of B is set to be in a range of 5 massppm or more and 1,000 massppm or less, and Expression (1) and Expression (2) and, furthermore, Expression (3) and Expression (4) are satisfied, and thus there is no case in which the castability degrades or casting breaking is generated, and it is possible to suppress the coarsening of crystal grains when the copper alloy is heated and held at a high temperature.

In addition, the copper alloy of the present invention may further include either or both of: 0.01 mass% or more and 0.15 mass% or less of Ni and 0.005 mass% or more and 0.07 mass% or less of Fe.

In this case, Ni and Fe are included in the above-described ranges, and thus it is possible to miniaturize precipitates containing Co and P without significantly degrading the electrical conductivity, and furthermore, the strength can be improved.

In addition, the copper alloy of the present invention may further include any one or more of: 0.002 mass% or more and 0.50 mass% or less of Zn, 0.002 mass% or more and 0.25 mass% or less of Mg, and 0.002 mass% or more and 0.25 mass% or less of Ag.

In this case, Zn, Mg, and Ag are included in the above-described ranges, and thus it is possible to fix S in the copper alloy without significantly degrading the castability and suppress S forming a solid solution in the matrix of copper, and the electrical conductivity can be improved.

A copper alloy ingot of another aspect of the present invention (hereinafter, referred to as the copper alloy ingot of the present invention) is a copper alloy ingot having the composition of the above-described copper alloy, in which the average crystal grain size after cold rolling of a working ratio of 50% and a heat treatment at 950°C for one hour is 400 $\mu$m or less.

In the copper alloy ingot having this constitution, the average crystal grain size after cold rolling of a working ratio of 50% and a heat treatment at 950°C for one hour is set to 400 $\mu$m or less, and thus the crystal grains coarsening during the holding of the copper alloy ingot at a high temperature is suppressed, and it is possible to obtain a copper alloy member which is excellent in terms of strength and electrical conductivity by carrying out a sufficient heat solution treatment.

In addition, in the copper alloy ingot of the present invention, an electrical conductivity after the heat treatment at 950°C for one hour is preferably 45%IACS or less.

In this case, a heat treatment is carried out at 950°C for one hour, and thus the electrical conductivity is decreased to 45%IACS or less, and the copper alloy ingot is sufficiently solutionized.

A solution material of a copper alloy of another aspect of the present invention (hereinafter, referred to as "the solution material of a copper alloy of the present invention") is a solution material of a copper material having the composition of the above-described copper alloy, in which an electrical conductivity is 45%IACS or less.

In the solid solution material of copper alloy having this constitution, the electrical conductivity is set to 45%IACS or less, and the solid solution material of copper alloy is sufficiently solutionized. Therefore, it is possible to finely and uniformly disperse precipitates by the subsequent aging heat treatment, and a copper alloy member that is excellent in terms of strength and electrical conductivity can be obtained.

A copper alloy trolley wire of another aspect of the present invention (hereinafter, referred to as "the copper alloy trolley wire of the present invention") having a composition includes 0.12 mass% or more and 0.40 mass% or less of Co, 0.04 mass% or more and 0.16 mass% or less of P, 0.01 mass% or more and 0.50 mass% or less of Sn, one or more of B, Cr, and Zr; and a Cu balance containing inevitable impurities,

wherein X, Y, and Z satisfy the following Expressions (1) and (2);

$$\text{Expression (1): } 1 \leq (X/5)+(Y/50)+(Z/100),$$

$$\text{Expression (2): } X+Y+Z \leq 1{,}000,$$

in case where the amount of B is represented by X (massppm), the amount of Cr is represented by Y (massppm), and the amount of Zr is represented by Z (massppm).

In the copper alloy trolley wire having the above-described constitution, Co; 0.12 mass% or more and 0.40 mass% or less, P; 0.04 mass% or more and 0.16 mass% or less, and Sn; 0.01 mass% or more and 0.50 mass% or less are included, and thus it is possible to provide a strength and an electrical conductivity necessary for a trolley wire.

In addition, any one or more of B, Cr, and Zr are included, and, when the amount of B is represented by X (massppm), the amount of Cr is represented by Y (massppm), and the amount of Zr is represented by Z (massppm), Expression (1) is satisfied, and thus, even in a case in which the copper alloy trolley wire is heated and held at a high temperature, the coarsening of the crystal grain diameters is suppressed due to the action of these elements, and the copper alloy trolley wire becomes excellent in terms of wear characteristics and fatigue characteristics. In addition, it becomes possible to carry out a sufficient heat solution treatment, precipitates can be finely and uniformly dispersed by the subsequent aging heat treatment, and it is possible to improve the strength and the electrical conductivity.

Meanwhile, the amounts of B, Cr, and Zr satisfy Expression (2), and thus it is possible to suppress the degradation of the castability or the generation of casting breaking due to the elements of B, Cr, and Zr.

Here, in the copper alloy trolley wire of the present invention, X and Y satisfy the following Expressions (3) and (4);

$$\text{Expression (3): } 1 \leq (2X/5)+(2Y/50),$$

$$\text{Expression (4): } Y<400.$$

In this case, Expression (3) is satisfied, and thus, even in a case in which the copper alloy trolley wire is heated and held at a high temperature, the coarsening of the crystal grain diameters can be further suppressed, and it is possible to further improve the wear characteristics and the fatigue characteristics. In addition, Expression (4) is satisfied, and thus it is possible to further suppress the degradation of the castability or the generation of casting breaking.

In addition, in the copper alloy trolley wire of the present invention, the amount of B may be in a range of 5 massppm or more and 1,000 massppm or less.

Even in a case in which, out of B, Cr, and Zr, only B is intentionally added to the copper alloy, the amount of B is set to be in a range of 5 massppm or more and 1,000 massppm or less, and Expression (1) and Expression (2) and, furthermore, Expression (3) and Expression (4) are satisfied, and thus there is no case in which the castability degrades or casting breaking is generated, it is possible to suppress the coarsening of crystal grains when the copper alloy is heated and held at a high temperature, and the wear characteristics and the fatigue characteristics can be improved..

A method of manufacturing a copper alloy trolley wire according to another aspect of the present invention (hereinafter, referred to as "the method of manufacturing a copper alloy trolley wire of the present invention") is a method of manufacturing the above-described copper alloy trolley wire including a continuous casting and rolling step of continuously producing a copper wire rod; a heat solid solution treatment step of carrying out a heat solution treatment on the copper wire obtained; a primary cold working step of producing a copper wire material by carrying out cold working on a solution material after the solid solution treatment step; an aging heat treatment step of carrying out an aging heat treatment on the copper wire material; and a secondary cold working step of carrying out cold working on an aging heat-treated material after the aging heat treatment step, in which, in the solid solution treatment step, a holding temperature is set to be in a range of 900°C or more and 1,000°C or less, and a holding time at the holding temperature is set to be in a range of 30 minutes or more and 600 minutes or less, and, in the aging heat treatment step, a heat treatment temperature is set to be in a range of 300°C or more and 600°C or less, and a holding time at the heat treatment temperature is set to be in a range of 60 minutes or more and 1,500 minutes or less.

According to the method of manufacturing a copper alloy trolley wire having this constitution, the continuous casting and rolling step of continuously producing a copper wire rod and the heat solid solution treatment step of carrying out a heat solution treatment on the obtained copper wire rod are included, and, in the heat solid solution treatment step, the holding temperature is set to be in a range of 900°C to 1,000°C, and the holding time at the holding temperature is set to be in a range of 30 minutes to 600 minutes, and thus it is possible to sufficiently solve the segregation of Co and P in the copper wire rod manufactured using a continuous casting rolling method.

In addition, in the aging heat treatment step, the heat treatment temperature is set to be in a range of 300°C to 600°C, and the holding time at the heat treatment temperature is set be in a range of 60 minutes to 1,500 minutes, and thus the aging treatment can be reliably carried out, and it is possible to sufficiently precipitate the precipitates of Co and P. Therefore, it becomes possible to manufacture a copper alloy trolley wire that is excellent in terms of strength and electrical conductivity.

Advantageous Effects of Invention

According to the present invention, it becomes possible to provide a copper alloy containing Co, P, and Sn which is capable of suppressing the coarsening of the crystal grain diameters even in a case in which a heat solution treatment is carried out, is excellent in terms of workability and high-temperature elongation, and is excellent in terms of strength and electrical conductivity, a copper alloy ingot, a solid solution material of copper alloy, and a copper alloy trolley wire which is excellent in terms of wear characteristics and fatigue characteristics and a method of manufacturing a copper alloy trolley wire.

Brief Description of Drawings

FIG. 1 is a flowchart showing a method of manufacturing a copper alloy member in a first embodiment of the present invention.

FIG. 2 is a schematic explanatory view of a continuous casting rolling facility used in the manufacturing method shown in FIG. 1.

FIG. 3 is a flowchart showing a method of manufacturing a copper alloy member in a second embodiment of the present invention.

FIG. 4 is a flowchart showing a method of manufacturing a copper alloy trolley wire in a third embodiment of the present invention.

FIG. 5A is an explanatory view of an H-shaped metal die being used to evaluate casting breaking in an example.

FIG. 5B is an explanatory view of the H-shaped metal die being used to evaluate casting breaking in the example.

FIG. 6 is a schematic explanatory view of a testing device being used to evaluate fatigue characteristics in the example.

FIG. 7 is a schematic explanatory view of a testing device being used to evaluate wear characteristics in the example.
FIG. 8 is a graph showing evaluation results of the fatigue characteristics (fatigue service lives) of Invention Example 82, Comparative Example 71, and a related art example.
FIG. 9 is a graph showing evaluation results of the wear characteristics of Invention Example 82 and the related art example.

Description of Embodiments

Hereinafter, an embodiment of the present invention will be described with reference to the accompanying drawings.
A copper alloy which is a first embodiment of the present invention has a composition including 0.05 mass% or more and 0.70 mass% or less of Co, 0.02 mass% or more and 0.20 mass% or less of P, 0.005 mass% or more and 0.70 mass% or less of Sn, any one or more of B, Cr, and Zr, and furthermore, a Cu balance containing inevitable impurities. The amount of B is represented by X (massppm). The amount of Cr is represented by Y (massppm). The amount of Zr is represented by Z (massppm). X, Y, and Z satisfy the following Expressions (1) and (2);

$$\text{Expression (1): } 1 \leq (X/5)+(Y/50)+(Z/100),$$

$$\text{Expression (2): } X+Y+Z \leq 1,000.$$

Furthermore, in the present embodiment, the contents of B, Cr, and Zr satisfy the following Expressions (3) and (4);

$$\text{Expression (3): } 1 \leq (2X/5)+(2Y/50),$$

$$\text{Expression (4): } Y < 400.$$

Meanwhile, the copper alloy may further include either or both of 0.01 mass% or more and 0.15 mass% or less of Ni and 0.005 mass% or more and 0.07 mass% or less of Fe.
In addition, the copper alloy may further include any one or more of 0.002 mass% or more and 0.50 mass% or less of Zn, 0.002 mass% or more and 0.25 mass% or less of Mg, and 0.002 mass% or more and 0.25 mass% or less of Ag.
Hereinafter, the reasons for setting the contents of the respective elements in the above-described ranges will be described.

(Co)

Co is an element that forms, together with P, precipitates which disperse in the matrix of copper.
Here, in a case in which the amount of Co is less than 0.05 mass%, the number of precipitates is insufficient, and there is a concern that it may be impossible to sufficiently improve the strength. On the other hand, in a case in which the amount of Co exceeds 0.70 mass%, a number of elements not contributing to the improvement of the strength are present, and there is a concern that a decrease in the electrical conductivity and the like may be caused.
Therefore, in the present embodiment, the amount of Co is set to be in a range of 0.05 mass% or more and 0.70 mass% or less.
Meanwhile, in order to reliably ensure the number of precipitates, the lower limit of the amount of Co is preferably set to 0.12 mass% or more and more preferably set to 0.25 mass% or more. On the other hand, in order to reliably suppress a decrease in the electrical conductivity, the upper limit of the amount of Co is preferably set to 0.40 mass% or less and more preferably set to 0.36 mass% or less.

(P)

P is an element that forms, together with Co, precipitates which disperse in the matrix of copper.
In a case in which the amount of P is less than 0.02 mass%, the number of precipitates is insufficient, and there is a concern that it may be impossible to sufficiently improve the strength. On the other hand, in a case in which the amount of P exceeds 0.20 mass%, there is a concern that a decrease in the electrical conductivity and the like may be caused.

Therefore, in the present embodiment, the amount of P is set to be in a range of 0.02 mass% or more and 0.20 mass% or less.

Meanwhile, in order to reliably ensure the number of precipitates, the lower limit of the amount of P is preferably set to 0.04 mass% or more and more preferably set to 0.08 mass% or more. On the other hand, in order to reliably suppress a decrease in the electrical conductivity, the upper limit of the amount of P is preferably set to 0.16 mass% or less and more preferably set to 0.14 mass% or less.

(Sn)

Sn is an element having an action in which Sn forms a solid solution in the matrix of copper so as to improve the strength. In addition, Sn also has an effect of accelerating the precipitation of precipitates containing Co and P as the main components and an action of improving heat resistance and corrosion resistance.

Here, in a case in which the amount of Sn is less than 0.005 mass%, there is a concern that it may be impossible to exhibit the above-described action effect. On the other hand, in a case in which the amount of Sn exceeds 0.70 mass%, there is a concern that it may be impossible to ensure the electrical conductivity.

Based on what has been described above, in the present embodiment, the amount of Sn is set to be in a range of 0.005 mass% or more and 0.70 mass% or less.

Meanwhile, in order to reliably exhibit the above-described action effect, the lower limit of the amount of Sn is preferably set to 0.01 mass% or more and more preferably set to 0.02 mass% or more. On the other hand, in order to reliably suppress a decrease in the electrical conductivity, the upper limit of the amount of Sn is preferably set to 0.50 mass% or less and more preferably set to 0.10 mass% or less.

(B, Cr, and Zr)

These B, Cr, and Zr are elements having an action of suppressing the coarsening of crystal grains when the copper alloy is held at a high temperature. Regarding the contents of B, Cr, and Zr, when the amount of B is represented by X (massppm), the amount of Cr is represented by Y (massppm), and the amount of Zr is represented by Z (massppm), Expression (1) and Expression (2) are specified.

In a case in which the contents of B, Cr, and Zr do not satisfy Expression (1): $1 \leq (X/5)+(Y/50)+(Z/100)$, it is not possible to sufficiently suppress the coarsening of crystal grains when the copper alloy is held at a high temperature, there is a concern that the strength may decrease and the copper alloy may embrittle at a high temperature, and there is another concern that the workability may degrade.

Meanwhile, in a case in which the contents of B, Cr, and Zr do not satisfy Expression (2): $X+Y+Z \leq 1,000$, there is a concern that the castability or the electrical conductivity may degrade or casting breaking may be generated.

Based on what has been described above, in the present embodiment, the contents of B, Cr, and Zr need to satisfy Expression (1) and Expression (2).

Meanwhile, in order to further suppress the coarsening of the crystal grains when the copper alloy is held at a high temperature, the contents of B, Cr, and Zr preferably satisfy Expression (3): $1 \leq (2X/5)+(2Y/50)$.

Furthermore, in order to further suppress the degradation of the castability or casting breaking, the contents of B, Cr, and Zr preferably satisfy Expression (4): $Y < 400$.

(Ni and Fe)

Ni and Fe are elements having an action effect of miniaturizing the precipitates made of the complex of Co and P.

Here, in a case in which the amount of Ni is less than 0.01 mass% or a case in which the amount of Fe is less than 0.005 mass%, there is a concern that it may be impossible to reliably exhibit the above-described action effect. On the other hand, in a case in which the amount of Ni exceeds 0.15 mass% or a case in which the amount of Fe exceeds 0.07 mass%, there is a concern that it may be impossible to ensure the electrical conductivity.

Therefore, in a case in which Ni is contained, the amount of Ni is preferably set in a range of 0.01 mass% or more and 0.15 mass% or less, and in a case in which Fe is contained, the amount of Fe is preferably set in a range of 0.005 mass% or more and 0.07 mass% or less.

(Zn, Mg, and Ag)

Elements such as Zn, Mg, and Ag are elements that form a compound with S and have an action of improving the electrical conductivity by suppressing the formation of a solid solution of S in the matrix of copper.

Here, in a case in which the contents of the elements of Zn, Mg, and Ag are respectively less than the above-described lower limit values, there is a concern that it may not be possible to sufficiently exhibit the action effect of suppressing the formation of the solid solution of S in the matrix of copper. On the other hand, in a case in which the contents of the elements of Zn, Mg, and Ag respectively exceed the above-described upper limit values, there is a concern that it may become impossible to ensure the electrical conductivity.

Therefore, in a case in which the elements of Zn, Mg, and Ag are contained, the contents thereof are preferably set in the above-described ranges respectively.

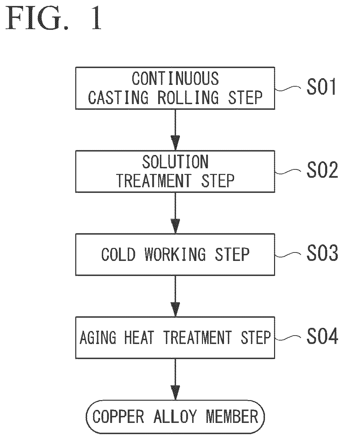

Next, a method of manufacturing a copper alloy member made of the above-described copper alloy will be described. FIG. 1 shows a flowchart of a method of manufacturing a copper alloy member which is the embodiment of the present invention.

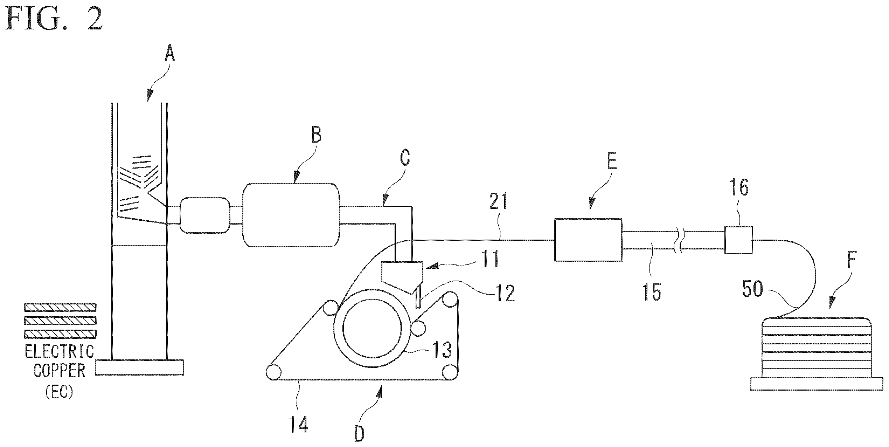

First, a copper wire rod 50 made of a copper alloy having the above-described composition is continuously produced using a continuous casting rolling method (continuous casting and rolling step S01). In this continuous casting and rolling step S01, for example, a continuous casting rolling facility shown in FIG. 2 is used.

The continuous casting rolling facility shown in FIG. 2 has a melting furnace A, a holding furnace B, a casting launder C, a belt-wheel type continuous casting apparatus D, a continuous rolling device E, and a coiler F.

As the melting furnace A, in the present embodiment, a shaft furnace having a cylindrical furnace main body is used.

In the lower portion of the furnace main body, a plurality of burners (not shown) is disposed in the circumferential direction in a multistep pattern in the vertical direction. In addition, electrolytic copper, which is a raw material, is charged from the upper portion of the furnace main body and is melted through the combustion of the burners, and molten copper is continuously produced.

The holding furnace B is a furnace for temporarily storing the molten copper produced in the melting furnace A while holding the molten copper at a predetermined temperature and for sending a certain amount of the molten copper to the casting launder C.

The casting launder C is a tube for transferring the molten copper sent from the holding furnace B to a tundish 11 disposed above the belt-wheel type continuous casting apparatus D. The casting launder C is sealed with, for example, an inert gas such as Ar or a reducing gas. Meanwhile, the casting launder C is provided with degassing means (not shown) for removing oxygen and the like in the molten metal by stirring the molten copper using the inert gas.

The tundish 11 is a storage tank provided to continuously supply the molten copper to the belt-wheel type continuous casting apparatus D. A pouring nozzle 12 is disposed in the tundish 11 on the end side in the flow direction of the molten copper, and the molten copper in the tundish 11 is supplied to the belt-wheel type continuous casting apparatus D through the pouring nozzle 12.

Here, in the present embodiment, alloy element addition means (not shown) is provided in the casting launder C and the tundish 11, and the above-described elements (Co, P, Sn, and the like) are added to the molten copper.

The belt-wheel type continuous casting apparatus D has a casting wheel 13 having trenches formed on the outer circumferential surface and an endless belt 14 being revolved around the casting wheel so as to come into contact with a part of the outer circumferential surface of the casting wheel 13. In the belt-wheel type continuous casting apparatus D, the molten copper is poured through the pouring nozzle 12 into spaces formed between the trenches and the endless belt 14, and the molten copper is cooled and solidified, thereby continuously casting a rod-shaped copper alloy ingot 21.

The continuous rolling device E is coupled to the downstream side of the belt-wheel type continuous casting apparatus D.

The continuous rolling device E continuously rolls the copper alloy ingot 21 produced from the belt-wheel type continuous casting apparatus D so as to produce the copper wire rod 50 having a predetermined outer diameter.

The copper wire rod 50 produced from the continuous rolling device E is wound around the coiler F through a cleaning and cooling device 15 and a flaw detector 16.

Here, the outer diameter of the copper wire rod 50 produced using the above-described continuous casting rolling facility is set, for example, in a range of 8 mm to 40 mm, and, in the present embodiment, is set to 27 mm.

Next, a heat solution treatment is carried out on the obtained copper wire rod 50 (heat solid solution treatment step S02). In this heat solid solution treatment step S02, the copper wire rod is heated in the atmosphere under conditions of a holding temperature in a range of 900°C to 1,000°C and a holding time in a range of 30 minutes to 600 minutes.

Meanwhile, in the solution material after the heat solid solution treatment step S02, the electrical conductivity is set to 45% or less.

Next, cold working is carried out on the solution material after the heat solid solution treatment step S02 (cold working step S03). In this cold working step S03, the working ratio is preferably set in a range of 10% to 99%. Meanwhile, as a working method, it is possible to use a variety of means such as wire drawing and rolling.

Next, an aging heat treatment is carried out on the cold-worked material after the cold working step S03 (aging heat treatment step S04). In this aging heat treatment step S04, precipitates made of a compound containing Co and P as the main components are precipitated.

Here, in the aging heat treatment step S04, the aging heat treatment is carried out under conditions of a heat treatment temperature of 200°C to 700°C and a holding time of one hour to 30 hours.

With the above-described steps, the copper alloy member made of the copper alloy which is the present embodiment is manufactured.

Meanwhile, cold working and a heat treatment may be further carried out after the aging heat treatment step S04 as necessary.

According to the copper alloy which is the present embodiment provided with the above-described constitution, any one or more of B, Cr, and Zr are included, and, when the amount of B is represented by X (massppm), the amount of Cr is represented by Y (massppm), and the amount of Zr is represented by Z (massppm), Expression (1): $1 \leq (X/5)+(Y/50)+(Z/100)$ is satisfied, and thus, even in a case in which the copper alloy is heated and held at a high temperature, the coarsening of the crystal grain diameters is suppressed due to these elements, and the wire drawability and the high-temperature elongation are excellent. In addition, it becomes possible to carry out a sufficient heat solution treatment, and it is possible to improve the strength and the electrical conductivity.

Meanwhile, the contents of B, Cr, and Zr satisfy Expression (2): $X+Y+Z \leq 1,000$, and thus it is possible to suppress the degradation of the castability or the generation of casting breaking or the like.

Here, in the copper alloy which is the present embodiment, Expression (3): $1 \leq (2X/5)+(2Y/50)$ is satisfied, and thus, even in a case in which the copper alloy is heated and held at a high temperature, the coarsening of the crystal grain diameters can be further suppressed.

In addition, Expression (4): $Y<400$ is satisfied, and thus it is possible to further suppress the degradation of the castability.

In addition, in the present embodiment, furthermore, in a case in which either or both of 0.01 mass% or more and 0.15 mass% or less of Ni and 0.005 mass% or more and 0.07 mass% or less of Fe are included, due to Ni and Fe, it is possible to miniaturize the compound of Co and P, and the strength can be further improved.

In addition, in the present embodiment, furthermore, in a case in which any one or more of 0.002 mass% or more and 0.5 mass% or less of Zn, 0.002 mass% or more and 0.25 mass% or less of Mg, and 0.002 mass% or more and 0.25 mass% or less of Ag are included, it is possible to detoxicate S that is mixed into the copper alloy in a recycle process of a copper material with Zn, Mg, and Ag, and it is possible to prevent intermediate temperature embrittlement and improve the strength and ductility of the copper alloy member.

In addition, in the present embodiment, in the solution material after the heat solid solution treatment step S02, the electrical conductivity is set to 45% or less, and thus the solution material is sufficiently solutionized. Therefore, it is possible to finely and uniformly disperse the precipitates by the subsequent aging heat treatment step S04, and a copper alloy member which is excellent in terms of strength and electrical conductivity can be obtained.

(Second Embodiment)

Next, a second embodiment of the present invention will be described.

A copper alloy which is the second embodiment of the present invention has a composition including 0.05 mass% or more and 0.70 mass% or less of Co, 0.02 mass% or more and 0.20 mass% or less of P, 0.005 mass% or more and 0.70 mass% or less of Sn, and B in a range of 5 massppm or more and 1,000 massppm or less and furthermore, a Cu balance containing inevitable impurities.

That is, in the first embodiment, out of B, Cr, and Zr, only B is added to the copper alloy. Meanwhile, when the amount of B is set to be in a range of 5 massppm or more and 1,000 massppm, and Expression (1), Expression (2), Expression (3), and Expression (4) are satisfied.

Meanwhile, similar to the first embodiment, furthermore, either or both of 0.01 mass% or more and 0.15 mass% or less of Ni and 0.005 mass% or more and 0.07 mass% or less of Fe may be included.

In addition, furthermore, any one or more of 0.002 mass% or more and 0.50 mass% or less of Zn, 0.002 mass% or more and 0.25 mass% or less of Mg, and 0.002 mass% or more and 0.25 mass% or less of Ag may be included.

Here, B is an element having an action of suppressing the coarsening of the crystal grains when the copper alloy is held at a high temperature as described above.

When the amount of B is set to 5 massppm or more, it is possible to exhibit the above-described action effect of suppressing the coarsening of the crystal grains. On the other hand, when the amount of B is set to 1,000 massppm or less, it is possible to suppress the degradation of the castability and the workability.

Based on what has been described above, in the present embodiment, the amount of B is set to be in a range of 5 massppm or more and 1,000 massppm or less.

Meanwhile, in order to reliably exhibit the above-described action effect, the lower limit of the amount of B is preferably set to 10 massppm and more preferably set to 15 massppm more. On the other hand, in order to reliably suppress the degradation of the castability and the workability, the upper limit of the amount of B is preferably set to 200 massppm or less and more preferably set to 100 massppm or less.

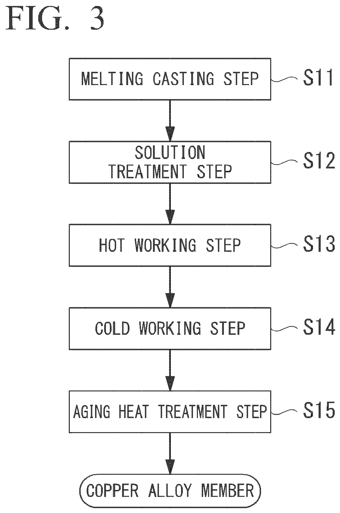

Next, a method of manufacturing a copper alloy member made of the above-described copper alloy will be described. FIG. 3 shows a flowchart of a method of manufacturing a copper alloy member which is the embodiment of the present invention.

First, a variety of raw materials are weighed so as to obtain the above-described composition, the raw materials are melted using a vacuum melting furnace, a molten copper alloy having adjusted components was injected into a casting mold, and a copper alloy ingot made of the copper alloy having the above-described composition is produced (melting casting step S11). Meanwhile, in a case in which mass production is taken into account, it is preferable to use a continuous casting method or a semi-continuous casting method.

Meanwhile, in this copper alloy ingot, the average crystal grain size after cold rolling of a working ratio of 50% and a heat treatment at 950°C for one hour is set to 400 $\mu$m or less.

In addition, in this copper alloy ingot, the electrical conductivity after a heat treatment at 950°C for one hour is set to 45%IACS or less.

Next, a heat solution treatment is carried out on the obtained copper alloy ingot (heat solid solution treatment step S12). In this heat solid solution treatment step S12, the copper alloy ingot is heated in the atmosphere under conditions of a holding temperature in a range of 900°C to 1,000°C and a holding time in a range of 30 minutes to 600 minutes.

Meanwhile, in the solution material after the heat solid solution treatment step S12, the electrical conductivity is set to 45% or less.

Next, hot working is carried out on the solution material after the heat solid solution treatment step S12 (hot working step S13). In this hot working step S13, the hot working temperature is preferably set in a range of 700°C to 1,000°C, and the working ratio is preferably set in a range of 10% to 99%. In addition, after the working, quenching is carried out on the solution material by water cooling or the like.

Next, cold working is carried out on the hot-worked material after the hot working step S13 (cold working step S14). In this cold working step S14, the working ratio is preferably set in a range of 10% to 99%. Meanwhile, as a working method, it is possible to use a variety of means such as wire drawing and rolling.

Next, an aging heat treatment is carried out on the cold-worked material after the cold working step S14 (aging heat treatment step S15). In this aging heat treatment step S15, precipitates made of a compound containing Co and P as the main components are precipitated.

Here, in the aging heat treatment step S15, the aging heat treatment is carried out under conditions of a heat treatment temperature of 200°C to 700°C and a holding time of one hour to 30 hours.

With the above-described steps, the copper alloy member made of the copper alloy which is the present embodiment is manufactured.

Meanwhile, cold working and a heat treatment may be further carried out after the aging heat treatment step S15 as necessary.

The copper alloy which is the present embodiment provided with the above-described constitution has a composition including 0.05 mass% or more and 0.70 mass% or less of Co, 0.02 mass% or more and 0.20 mass% or less of P, and 0.005 mass% or more and 0.70 mass% or less of Sn, and furthermore, B in a range of 5 massppm or more and 1,000 massppm or less with a Cu balance containing inevitable impurities, and thus, even in a case in which the copper alloy is heated and held at a high temperature, coarsening of the crystal grain diameters is suppressed due to B, and the workability and the high-temperature elongation are excellent. In addition, it becomes possible to carry out a sufficient heat solution treatment, and it is possible to improve the strength and the electrical conductivity. Furthermore, the amount of B is set to 1,000 massppm or less, and thus it is possible to suppress the degradation of the castability or the generation of casting breaking.

In addition, in the copper alloy ingot of the present embodiment, the average crystal grain size after cold rolling of a working ratio of 50% and a heat treatment at 950°C for one hour is set to 400 $\mu$m or less, and thus the crystal grains coarsening during the holding of the copper alloy ingot at a high temperature is suppressed, and it is possible to suppress the degradation of the workability, high-temperature embrittlement, and the like attributed to the coarsening of the crystal grains even when the solution material is sufficiently solutionized by carrying out the heat solution treatment under a high-temperature condition in the heat solid solution treatment step S13.

Furthermore, in the copper alloy ingot of the present embodiment, the electrical conductivity after a heat treatment at 950°C for one hour is set to 45%IACS or less, and thus it is possible to sufficiently carry out the heat solution treatment.

Therefore, when the heat solution treatment is carried out under a high-temperature condition, in the subsequent aging heat treatment step S15, it becomes possible to finely and uniformly disperse precipitates made of a compound containing Co and P as main components, and a copper alloy member which is excellent in terms of strength and electrical conductivity can be obtained.

(Third Embodiment)

Next, a third embodiment of the present invention will be described.

A copper alloy trolley wire which is the third embodiment of the present invention has a composition including 0.12 mass% or more and 0.40 mass% or less of Co, 0.04 mass% or more and 0.16 mass% or less of P, 0.01 mass% or more and 0.50 mass% or less of Sn, and any one or more of B, Cr, and Zr, and furthermore, a Cu balance containing inevitable impurities. An amount of B is represented by X (massppm). An amount of Cr is represented by Y (massppm). An amount of Zr is represented by Z (massppm). X and Y satisfy the following Expressions (1) and (2);

$$\text{Expression (1): } 1 \leq (X/5) + (Y/50) + (Z/100),$$

$$\text{Expression (2): } X + Y + Z \leq 1{,}000.$$

Furthermore, in the present embodiment, the amounts of B, Cr, and Zr satisfy the following Expressions (3) and (4);

$$\text{Expression (3): } 1 \leq (2X/5) + (2Y/50),$$

$$\text{Expression (4): } Y < 400.$$

Meanwhile, in the present embodiment, the amount of B may be in a range of 5 massppm or more and 1,000 massppm or less, and Expression (1), Expression (2), Expression (3), and Expression (4) may be satisfied.

Here, in the present embodiment, in order to ensure the characteristics (strength and electrical conductivity) as a trolley wire, the amount of Co is set to be in a range of 0.12 mass% or more and 0.40 mass% or less, the amount of P is set to be in a range of 0.04 mass% or more and 0.16 mass% or less, and the amount of Sn is set to be in a range of 0.01 mass% or more and 0.50 mass% or less.

Meanwhile, in the copper alloy trolley wire which is the present embodiment, the tensile strength is preferably 532 MPa or more, and the electrical conductivity is preferably 76%IACS or more.

In addition, in the present embodiment, in order to suppress the coarsening of the crystal grain diameters and improve the wear characteristics and the fatigue characteristics, similar to the first embodiment, any one or more of B, Cr, and Zr are included, and Expression (1), Expression (2), Expression (3), and Expression (4) are satisfied.

In addition, in order to suppress the coarsening of the crystal grain diameters and improve the wear characteristics and the fatigue characteristics, similar to the first embodiment, the copper alloy trolley wire may contain B in a range of 5 massppm or more and 1,000 massppm or less.

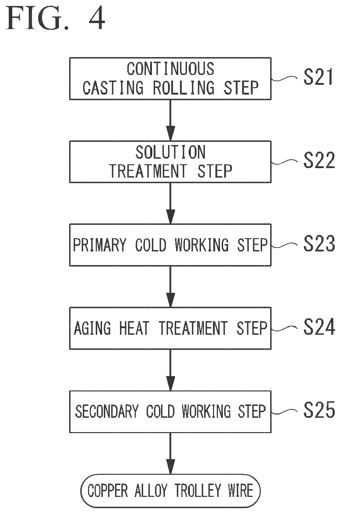

Next, a method of manufacturing a copper alloy trolley wire made of the copper alloy will be described. FIG. 4 is a flowchart of a method of manufacturing a copper alloy trolley wire which is an embodiment of the present invention.

First, a copper wire rod made of a copper alloy having the above-described composition is continuously produced using a continuous casting rolling method (continuous casting and rolling step S21). In this continuous casting and rolling step S21, similar to the first embodiment, for example, the continuous casting rolling facility shown in FIG. 2 is used.

Here, the outer diameter of the copper wire rod being produced using the above-described continuous casting rolling facility is set to, for example, 8 mm to 40 mm and is set to 27 mm in the present embodiment.

Next, a heat solution treatment is carried out on the obtained copper wire rod (heat solid solution treatment step S22). In this heat solid solution treatment step S22, the copper wire rod is heated in the atmosphere under conditions of a holding temperature in a range of 900°C to 1,000°C and a holding time in a range of 30 minutes to 600 minutes.

Meanwhile, in the solution material after the heat solid solution treatment step S22, the electrical conductivity is set to 45% or less.

Next, cold working is carried out on the solution material after the heat solid solution treatment step S22, thereby obtaining a copper wire material (primary cold working step S23). In the primary cold working step S23, the working ratio is preferably set in a range of 5% to 90%. Meanwhile, as a working method, it is possible to use a variety of means such as cold wire drawing, peeling, trenched wire drawing, and rolling.

Next, an aging heat treatment is carried out on the copper wire material after the primary cold working step S23 (aging heat treatment step S24). In this aging heat treatment step S24, precipitates made of a compound containing Co and P as the main components are precipitated.

Here, in the aging heat treatment step S24, the aging heat treatment is carried out under conditions of a heat treatment temperature of 300°C to 600°C and a holding time of 60 minutes to 1,500 minutes.

In the aging-heat-treated material being obtained by the aging heat treatment step S24, the electrical conductivity is preferably 76IACS% or more.

Next, cold working is further carried out on the aging heat-treated material after the aging heat treatment step S24 (secondary cold working step S25). In the secondary cold working step S25, the working ratio is preferably set in a range of 5% to 90%. Meanwhile, as a working method, it is possible to use a variety of means such as cold wire drawing, trenched wire drawing, and rolling.

With the above-described steps, the copper alloy trolley wire made of the copper alloy which is the present embodiment is manufactured.

Meanwhile, a heat treatment and cold working may be further carried out after the secondary cold working step S25 as necessary.

The copper alloy trolley wire which is the present embodiment provided with the above-described constitution has a composition including 0.12 mass% or more and 0.40 mass% or less of Co, 0.04 mass% or more and 0.16 mass% or less of P, and 0.01 mass% or more and 0.50 mass% or less of Sn, and furthermore, any one or more of B, Cr, and Zr, a Cu balance containing inevitable impurities and is thus capable of satisfying the strength and the electrical conductivity being demanded as a trolley wire.

In addition, due to B, Cr, and Zr, even in a case in which the copper alloy trolley wire is heated and held at a high temperature, the coarsening of the crystal grain diameters can be suppressed, and it is possible to further improve the wear characteristics and the fatigue characteristics. In addition, it becomes possible to carry out a sufficient heat solution treatment, and it is possible to further improve the strength and the electrical conductivity.

Furthermore, the method of manufacturing a copper alloy trolley wire of the present embodiment includes the continuous casting and rolling step S21 of continuously producing a copper wire rod and the heat solid solution treatment step S22 of carrying out a heat solution treatment on the obtained copper wire rod, and, in the heat solid solution treatment step S22, the holding temperature is set to be in a range of 900°C to 1,000°C, and the holding time at the holding temperature is set to be in a range of 30 minutes to 600 minutes, and thus it is possible to sufficiently solve the segregation of Co and P in the copper wire rod manufactured using a continuous casting rolling method.

In addition, in the aging heat treatment step S24, the heat treatment temperature is set to be in a range of 300°C to 600°C, and the holding time at the heat treatment temperature is set to be in a range of 60 minutes to 1,500 minutes, and thus it is possible to reliably carry out the aging treatment, and Co and P can be precipitated. Therefore, it becomes possible to manufacture a copper alloy trolley wire that is excellent in terms of strength and electrical conductivity.

Hitherto, the copper alloy, the copper alloy ingot, the solid solution material of copper alloy, and the copper alloy trolley wire which are the embodiments of the present invention have been described, but the present invention is not limited thereto, and the embodiments can be appropriately modified within the scope of the technical idea of the present invention.

For example, in the first embodiment and the third embodiment, as an example of the method of manufacturing the copper alloy member (the copper alloy trolley wire), a manufacturing method in which the belt-wheel type continuous casting apparatus D shown in FIG. 2 is used has been described, but the manufacturing method is not limited thereto, and a twin belt-type continuous caster or the like may be used. In addition, a continuous-cast wire rod may also be manufactured using an upward continuous caster, a transverse continuous caster, and a hot top continuous caster.

In addition, as in the second embodiment, a copper alloy ingot may be manufactured, and the heat solution treatment may be carried out on this copper alloy ingot.

Examples

Hereinafter, the results of a confirmation test carried out to confirm the effectiveness of the present invention will be described.

<Example 1>

A variety of raw materials were weighed so as to obtain a composition shown in Table 1-3, and the raw materials were melted using a vacuum melting furnace. After the raw materials were burned through, the molten metal was held for 10 minutes and injected into a casting mold in an inert gas atmosphere at a molten metal temperature of 1,200°C, thereby obtaining a copper alloy ingot having ingot dimensions of 50x80x150 mm (approximately 5 kg).

Next, on the copper alloy ingot, a heat solution treatment was carried out under conditions shown in Table 4-6 using an air atmosphere furnace.

The solution material after the heat solution treatment was rolled using a hot rolling device at a working ratio of 80% and then cooled with water.

The obtained hot-rolled material was cold-worked at a working ratio of 80%, and then an aging heat treatment was carried out using the air atmosphere furnace under conditions of being held at 500°C for one hour.

(Average Crystal Grain Size)

Cold working of a working ratio of 50% was carried out on the copper alloy ingot obtained as described above, held at 950°C for one hour using the air atmosphere furnace, and then cooled with water. The obtained test specimen was polished with emery paper and a buff, etched with an etchant, and then observed using an optical microscope at an appropriate magnification, and the average crystal grain size was computed using an area method specified by JIS H0321. The evaluation results are shown in Table 4-6.

(High-Temperature Elongation)

A test specimen having a shape specified by JIS G0567 was sampled from the hot-rolled material, and a tensile test was carried out at 500°C, thereby evaluating the elongation. The evaluation results are shown in Table 4-6.

(Strength)

A test specimen having a shape specified by JIS Z2241 was sampled from a copper alloy member after an aging heat treatment, and a tensile test was carried out at room temperature, thereby evaluating the tensile strength. The evaluation results are shown in Table 4-6.

(Electrical conductivity)

The electrical conductivity of the copper alloy member after an aging heat treatment was measured using a four-terminal method. The evaluation results are shown in Table 4-6.

(Wire Drawability)

Cold wire drawing of a working ratio of 80% was carried out on the above-described hot-worked material, thereby working the hot-worked material to a copper alloy wire having a diameter of 4 mm. The number of times of wire breaking when the copper alloy wire was drawn until the drawn wire length reached 100 m in a diameter of 4 mm was evaluated, and an equivalent value of the number of times of wire breaking occurring per 10 m was considered as the wire drawability. The evaluation results are shown in Table 4-6.

(Castability)

A variety of raw materials were weighed so as to obtain a composition shown in the table, and the raw materials (3 kg) were charged into an alumina crucible. The raw materials were melted in an Ar gas atmosphere, burned through, and then held for 20 minutes at 1,200°C. The molten metal was gently poured into a separately-prepared mold, a film generated on the molten steel surface was left in the aluminum crucible, and the weight of the film was measured. The evaluation results are shown in Table 4-6.

(Casting Breaking)

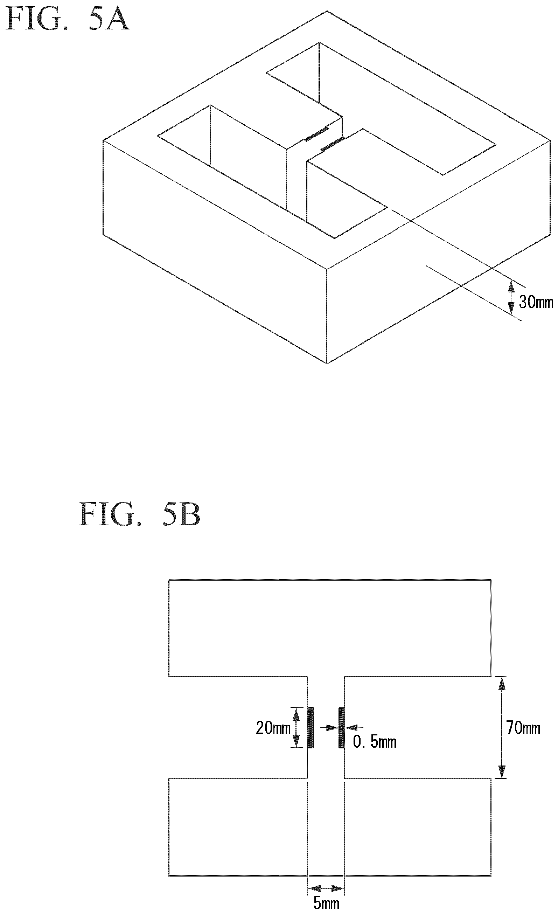

The raw materials were melted using a vacuum melting furnace at 1,200°C and then cast in an H-shaped metal die shown in FIGS. 5A and 5B. Meanwhile, the H-shaped metal die had been heated to 100°C in advance. The casting product was cooled in the atmosphere to room temperature, and then the presence or absence of breaking in an H shape central portion was evaluated. The evaluation results are shown in Table 4-6.

[Table 1]

| | | Alloy component composition | | | | | | | | | | | |
|---|---|---|---|---|---|---|---|---|---|---|---|---|---|
| | | Co mass% | P mass% | Sn mass% | B massppm | Cr massppm | Zr massppm | Ni mass% | Fe mass% | Zn mass% | Mg mass% | Ag mass% | Cu |
| Invention Example | 1 | 0.31 | 0.12 | 0.04 | 5 | 0 | 0 | - | - | - | - | - | Balance |
| | 2 | 0.30 | 0.11 | 0.04 | 910 | 0 | 0 | - | - | - | - | - | Balance |
| | 3 | 0.30 | 0.10 | 0.04 | 500 | 0 | 0 | - | - | - | - | - | Balance |
| | 4 | 0.30 | 0.10 | 0.04 | 410 | 380 | 0 | - | - | - | - | - | Balance |
| | 5 | 0.30 | 0.10 | 0.04 | 380 | 330 | 210 | - | - | - | - | - | Balance |
| | 6 | 0.30 | 0.10 | 0.04 | 7 | 60 | 0 | - | - | - | - | - | Balance |
| | 7 | 0.30 | 0.11 | 0.04 | 8 | 0 | 120 | - | - | - | - | - | Balance |
| | 8 | 0.31 | 0.11 | 0.04 | 0 | 70 | 0 | - | - | - | - | - | Balance |
| | 9 | 0.30 | 0.12 | 0.04 | 2.5 | 0 | 50 | - | - | - | - | - | Balance |
| | 10 | 0.30 | 0.10 | 0.04 | 0 | 400 | 0 | - | - | - | - | - | Balance |
| | 11 | 0.30 | 0.10 | 0.04 | 0 | 25 | 50 | - | - | - | - | - | Balance |
| | 12 | 0.30 | 0.10 | 0.04 | 1 | 20 | 40 | - | - | - | - | - | Balance |
| | 13 | 0.30 | 0.10 | 0.04 | 1 | 20 | 900 | - | - | - | - | - | Balance |
| | 14 | 0.30 | 0.11 | 0.04 | 0 | 20 | 70 | - | - | - | - | - | Balance |
| | 15 | 0.30 | 0.10 | 0.04 | 2 | 4 | 60 | - | - | - | - | - | Balance |
| | 16 | 0.30 | 0.10 | 0.04 | 0 | 0 | 110 | - | - | - | - | - | Balance |
| | 17 | 0.31 | 0.10 | 0.04 | 0 | 0 | 890 | - | - | - | - | - | Balance |
| | 18 | 0.30 | 0.11 | 0.04 | 0 | 930 | 0 | - | - | - | - | - | Balance |
| | 21 | 0.06 | 0.10 | 0.04 | 2 | 4 | 60 | - | - | - | - | - | Balance |
| | 22 | 0.12 | 0.10 | 0.04 | 2 | 4 | 60 | - | - | - | - | - | Balance |
| | 23 | 0.25 | 0.10 | 0.04 | 2 | 4 | 60 | - | - | - | - | - | Balance |

[Table 2]

| | | Alloy component composition | | | | | | | | | | | |
|---|---|---|---|---|---|---|---|---|---|---|---|---|---|
| | | Co mass% | P mass% | Sn mass% | B massppm | Cr massppm | Zr massppm | Ni mass% | Fe mass% | Zn mass% | Mg mass% | Ag mass% | Cu |
| Invention Example | 24 | 0.36 | 0.10 | 0.04 | 2 | 4 | 60 | - | - | - | - | - | Balance |
| | 25 | 0.40 | 0.10 | 0.04 | 2 | 4 | 60 | - | - | - | - | - | Balance |
| | 26 | 0.60 | 0.10 | 0.04 | 2 | 4 | 60 | - | - | - | - | - | Balance |
| | 27 | 0.31 | 0.02 | 0.04 | 2 | 4 | 60 | - | - | - | - | - | Balance |
| | 28 | 0.31 | 0.04 | 0.04 | 2 | 4 | 60 | - | - | - | - | - | Balance |
| | 29 | 0.30 | 0.08 | 0.04 | 2 | 4 | 60 | - | - | - | - | - | Balance |
| | 30 | 0.30 | 0.14 | 0.04 | 2 | 4 | 60 | - | - | - | - | - | Balance |
| | 31 | 0.30 | 0.16 | 0.04 | 2 | 4 | 60 | - | - | - | - | - | Balance |
| | 32 | 0.30 | 0.18 | 0.04 | 2 | 4 | 60 | - | - | - | - | - | Balance |
| | 33 | 0.30 | 0.11 | 0.006 | 2 | 4 | 60 | - | - | - | - | - | Balance |
| | 34 | 0.30 | 0.11 | 0.01 | 2 | 4 | 60 | - | - | - | - | - | Balance |
| | 35 | 0.30 | 0.10 | 0.02 | 2 | 4 | 60 | - | - | - | - | - | Balance |
| | 36 | 0.30 | 0.10 | 0.10 | 2 | 4 | 60 | - | - | - | - | - | Balance |
| | 37 | 0.31 | 0.10 | 0.50 | 2 | 4 | 60 | - | - | - | - | - | Balance |
| | 38 | 0.30 | 0.10 | 0.68 | 2 | 4 | 60 | - | - | - | - | - | Balance |
| | 41 | 0.30 | 0.10 | 0.04 | 10 | 0 | 0 | - | - | - | - | - | Balance |
| | 42 | 0.30 | 0.10 | 0.04 | 15 | 0 | 0 | - | - | - | - | - | Balance |
| | 43 | 0.30 | 0.10 | 0.04 | 30 | 0 | 0 | - | - | - | - | - | Balance |
| | 44 | 0.30 | 0.10 | 0.04 | 100 | 0 | 0 | - | - | - | - | - | Balance |
| | 45 | 0.30 | 0.10 | 0.04 | 200 | 0 | 0 | - | - | - | - | - | Balance |

[Table 3]

| | | Alloy component composition | | | | | | | | | | | |
|---|---|---|---|---|---|---|---|---|---|---|---|---|---|
| | | Co mass% | P mass% | Sn mass% | B massppm | Cr massppm | Zr massppm | Ni mass% | Fe mass% | Zn mass% | Mg mass% | Ag mass% | Cu |
| Invention Example | 51 | 0.30 | 0.10 | 0.04 | 2 | 4 | 60 | 0.143 | 0.000 | 0.000 | 0.000 | 0.000 | Balance |
| | 52 | 0.30 | 0.10 | 0.04 | 2 | 4 | 60 | 0.000 | 0.069 | 0.000 | 0.000 | 0.000 | Balance |
| | 53 | 0.30 | 0.10 | 0.04 | 2 | 4 | 60 | 0.011 | 0.000 | 0.000 | 0.000 | 0.000 | Balance |
| | 54 | 0.30 | 0.10 | 0.04 | 2 | 4 | 60 | 0.000 | 0.007 | 0.000 | 0.000 | 0.000 | Balance |
| | 55 | 0.31 | 0.10 | 0.04 | 2 | 4 | 60 | 0.035 | 0.040 | 0.000 | 0.000 | 0.000 | Balance |
| | 56 | 0.30 | 0.10 | 0.04 | 2 | 4 | 60 | 0.035 | 0.040 | 0.496 | 0.000 | 0.000 | Balance |
| | 57 | 0.31 | 0.10 | 0.04 | 2 | 4 | 60 | 0.035 | 0.040 | 0.000 | 0.246 | 0.000 | Balance |
| | 58 | 0.30 | 0.10 | 0.04 | 2 | 4 | 60 | 0.035 | 0.040 | 0.000 | 0.000 | 0.248 | Balance |
| | 59 | 0.30 | 0.10 | 0.04 | 2 | 4 | 60 | 0.035 | 0.040 | 0.0041 | 0.000 | 0.000 | Balance |
| | 60 | 0.30 | 0.10 | 0.04 | 2 | 4 | 60 | 0.035 | 0.040 | 0.000 | 0.0033 | 0.000 | Balance |
| | 61 | 0.30 | 0.10 | 0.04 | 2 | 4 | 60 | 0.035 | 0.040 | 0.000 | 0.000 | 0.0029 | Balance |
| | 62 | 0.31 | 0.10 | 0.04 | 2 | 4 | 60 | 0.035 | 0.040 | 0.035 | 0.005 | 0.000 | Balance |
| | 63 | 0.30 | 0.10 | 0.04 | 2 | 4 | 60 | 0.035 | 0.040 | 0.035 | 0.005 | 0.004 | Balance |
| Comparative Example | 1 | 0.31 | 0.10 | 0.05 | 0 | 0 | 0 | - | - | - | - | - | Balance |
| | 2 | 0.31 | 0.11 | 0.04 | 0 | 30 | 0 | - | - | - | - | - | Balance |
| | 3 | 0.31 | 0.10 | 0.04 | 250 | 900 | 900 | - | - | - | - | - | Balance |
| | 4 | 0.31 | 0.10 | 0.04 | 3000 | 0 | 0 | - | - | - | - | - | Balance |
| | 51 | 0.30 | 0.10 | 0.04 | 2 | 4 | 60 | 0.300 | 0.200 | 0.000 | 0.000 | 0.000 | Balance |
| | 52 | 0.30 | 0.10 | 0.04 | 2 | 4 | 60 | 0.035 | 0.040 | 0.800 | 0.300 | 0.300 | Balance |

[Table 4]

| | | Step | | Evaluation | | | | | | |
|---|---|---|---|---|---|---|---|---|---|---|
| | | Heat solution temperature °C | Heat solution time min. | Average crystal grain size µm | Drawability Times/10 m | High-temperature % | Castability g | Casting breaking | Strength MPa | Conductivity %IACS |
| Invention Example | 1 | 950 | 60 | 120 | 0.0 | 15 | 15 | No breakage | 557 | 69.8 |
| | 2 | 950 | 60 | 70 | 0.0 | 18 | 25 | No breakage | 558 | 68.7 |
| | 3 | 950 | 60 | 70 | 0.0 | 19 | 25 | No breakage | 559 | 69.0 |
| | 4 | 950 | 60 | 70 | 0.0 | 18 | 40 | No breakage | 568 | 67.8 |
| | 5 | 950 | 60 | 70 | 0.0 | 18 | 40 | No breakage | 564 | 67.4 |
| | 6 | 950 | 60 | 110 | 0.0 | 15 | 30 | No breakage | 557 | 68.7 |
| | 7 | 950 | 60 | 110 | 0.0 | 14 | 30 | No breakage | 568 | 68.3 |
| | 8 | 950 | 60 | 180 | 0.4 | 14 | 30 | No breakage | 566 | 68.8 |
| | 9 | 950 | 60 | 180 | 0.1 | 15 | 30 | No breakage | 555 | 68.2 |
| | 10 | 950 | 60 | 160 | 0.3 | 16 | 40 | No breakage | 555 | 67.0 |
| | 11 | 950 | 60 | 180 | 0.3 | 14 | 30 | No breakage | 560 | 68.0 |
| | 12 | 950 | 60 | 180 | 0.4 | 14 | 30 | No breakage | 562 | 67.9 |
| | 13 | 950 | 60 | 180 | 0.3 | 15 | 40 | No breakage | 561 | 66.3 |

| | | Step | | Evaluation | | | | | | |
|---|---|---|---|---|---|---|---|---|---|---|
| | | Heat solution temperature °C | Heat solution time min. | Average crystal grain size μm | Drawability Times/10 m | High-temperature % | Castability g | Casting breaking | Strength MPa | Conductivity %IACS |
| | 14 | 950 | 60 | 280 | 1.2 | 9 | 30 | No breakage | 558 | 68.8 |
| | 15 | 950 | 60 | 200 | 1.1 | 9 | 30 | No breakage | 567 | 68.5 |
| | 16 | 950 | 60 | 370 | 1.2 | 7 | 30 | No breakage | 569 | 68.2 |
| | 17 | 950 | 60 | 320 | 1.1 | 7 | 40 | No breakage | 560 | 66.2 |
| | 18 | 950 | 60 | 170 | 0.3 | 14 | 80 | Fine crack | 560 | 66.0 |
| | 21 | 950 | 60 | 210 | 1.3 | 8 | 30 | No breakage | 552 | 68.9 |
| | 22 | 950 | 60 | 220 | 1.2 | 8 | 30 | No breakage | 560 | 68.8 |
| | 23 | 950 | 60 | 180 | 1.3 | 7 | 30 | No breakage | 567 | 68.6 |

[Table 5]

| | | Step | | Evaluation | | | | | | |
|---|---|---|---|---|---|---|---|---|---|---|
| | | Heat solution temperature °C | Heat solution time min. | Average crystal μm | Drawability Times/10 m | High-temperature elongation % | Castability g | Casting breaking | Strength MPa | Conductivity %IACS |
| Invention Example | 24 | 950 | 60 | 220 | 1.1 | 8 | 30 | No breakage | 568 | 68.4 |
| | 25 | 950 | 60 | 210 | 1.3 | 8 | 30 | No breakage | 569 | 67.1 |
| | 26 | 950 | 60 | 200 | 1.3 | 8 | 30 | No breakage | 569 | 66.1 |
| | 27 | 950 | 60 | 210 | 1.2 | 9 | 30 | No breakage | 551 | 68.9 |
| | 28 | 950 | 60 | 220 | 1.3 | 9 | 30 | No breakage | 559 | 68.7 |
| | 29 | 950 | 60 | 200 | 1.3 | 8 | 30 | No breakage | 566 | 68.6 |
| | 30 | 950 | 60 | 220 | 1.1 | 8 | 30 | No breakage | 568 | 68.4 |
| | 31 | 950 | 60 | 220 | 1.3 | 9 | 30 | No breakage | 568 | 67.2 |
| | 32 | 950 | 60 | 230 | 1.3 | 8 | 30 | No breakage | 569 | 66.2 |
| | 33 | 950 | 60 | 190 | 1.1 | 8 | 30 | No breakage | 551 | 68.8 |
| | 34 | 950 | 60 | 190 | 1.3 | 9 | 30 | No breakage | 558 | 68.7 |
| | 35 | 950 | 60 | 200 | 1.2 | 8 | 30 | No breakage | 566 | 68.5 |
| | 36 | 950 | 60 | 220 | 1.4 | 7 | 30 | No breakage | 558 | 68.3 |

| | | Step | | Evaluation | | | | | | |
|---|---|---|---|---|---|---|---|---|---|---|
| | | Heat solution temperature °C | Heat solution time min. | Average crystal μm | Drawability Times/10 m | High-temperature elongation % | Castability g | Casting breaking | Strength MPa | Conductivity %IACS |
| | 37 | 950 | 60 | 210 | 1.3 | 7 | 30 | No breakage | 570 | 67.0 |
| | 38 | 950 | 60 | 210 | 1.3 | 8 | 30 | No breakage | 570 | 66.2 |
| | 41 | 950 | 60 | 90 | 0.0 | 16 | 15 | No breakage | 555 | 69.8 |
| | 42 | 950 | 60 | 70 | 0.0 | 18 | 15 | No breakage | 556 | 69.5 |
| | 43 | 950 | 60 | 70 | 0.0 | 18 | 15 | No breakage | 558 | 69.5 |
| | 44 | 950 | 60 | 70 | 0.0 | 19 | 20 | No breakage | 560 | 69.4 |
| | 45 | 950 | 60 | 70 | 0.0 | 19 | 25 | No breakage | 560 | 69.2 |

[Table 6]

| | | Step | | Evaluation | | | | | | |
|---|---|---|---|---|---|---|---|---|---|---|
| | | Heat solution temperature °C | Heat solution time min. | Average crystal grain size μm | Drawability Times/10 m | High-temperature elongation % | Castability g | Casting breaking | Strength MPa | Conductivity %IACS |
| Invention Example | 51 | 950 | 60 | 210 | 1.3 | 9 | 30 | No breakage | 574 | 67.1 |
| | 52 | 950 | 60 | 210 | 1.3 | 9 | 30 | No breakage | 575 | 67.6 |
| | 53 | 950 | 60 | 200 | 1.2 | 8 | 30 | No breakage | 572 | 66.7 |
| | 54 | 950 | 60 | 190 | 1.4 | 8 | 30 | No breakage | 571 | 67.1 |
| | 55 | 950 | 60 | 220 | 1.5 | 9 | 30 | No breakage | 583 | 68.1 |
| | 56 | 950 | 60 | 220 | 1.1 | 7 | 30 | No breakage | 581 | 71.0 |
| | 57 | 950 | 60 | 200 | 1.2 | 9 | 30 | No breakage | 577 | 71.3 |
| | 58 | 950 | 60 | 180 | 1.1 | 8 | 30 | No breakage | 580 | 72.2 |
| | 59 | 950 | 60 | 200 | 1.2 | 7 | 30 | No breakage | 576 | 72.4 |
| | 60 | 950 | 60 | 200 | 1.2 | 8 | 30 | No breakage | 579 | 72.2 |
| | 61 | 950 | 60 | 210 | 1.3 | 8 | 30 | No breakage | 571 | 72.1 |
| | 62 | 950 | 60 | 210 | 1.3 | 7 | 30 | No breakage | 579 | 72.3 |
| | 63 | 950 | 60 | 220 | 1.5 | 7 | 30 | No breakage | 583 | 72.2 |

(continued)

| | | Step | | Evaluation | | | | | | |
|---|---|---|---|---|---|---|---|---|---|---|
| | | Heat solution temperature °C | Heat solution time min. | Average crystal grain size $\mu$m | Drawability Times/10 m | High-temperature elongation % | Castability g | Casting breaking | Strength MPa | Conductivity %IACS |
| Comparative Example | 1 | 950 | 60 | 1100 | 9.1 | 2 | 15 | No breakage | 530 | 69.5 |
| | 2 | 950 | 60 | 800 | 8.8 | 2 | 30 | No breakage | 536 | 69.1 |
| | 3 | 950 | 60 | 90 | 0.0 | 18 | 121 | Fine crack | 564 | 65.8 |
| | 4 | 950 | 60 | 70 | 0.0 | 19 | 110 | breakage | 561 | 65.9 |
| | 51 | 950 | 60 | 220 | 1.3 | 9 | 30 | No breakage | 582 | 65.2 |
| | 52 | 950 | 60 | 220 | 1.4 | 8 | 30 | No breakage | 587 | 64.1 |

In Comparative Examples 1 and 2, the contents of B, Zr, and Cr were below the ranges of the present invention, the average crystal grain sizes were great, and the wire drawability, the high-temperature elongation, and the strength were insufficient.

In Comparative Examples 3 and 4, the contents of B, Zr, and Cr were above the ranges of the present invention, the castability was poor, and casting breaking was also confirmed in Comparative Example 3. In addition, the electrical conductivity also became poor.

In Comparative Example 51, the contents of Ni and Fe were above the ranges of the present invention, and, In Comparative Example 51, the contents of Zn, Mg, and Ag were above the ranges of the present invention, and the electrical conductivity became poor.

In contrast, according to the invention examples, the average crystal grain sizes were small, and the wire drawability and the high-temperature elongation are excellent. In addition, the castability was also favorable, and casting breaking was not confirmed. Furthermore, the strength and the electrical conductivity were excellent.

Here, in Invention Example 1-3, neither Cr nor Zr were included, and the castability was particularly preferred. In addition, in Invention Examples 51 to 63 to which Fe, Ni, Zn, Mg, and Ag were added, the strength further improved.

Based on what has been described above, it was confirmed that, according to the invention examples, it is possible to provide a copper alloy which is capable of suppressing the coarsening of the crystal grain diameters even in a case in which a heat solution treatment is carried out, is excellent in terms of wire drawability and high-temperature elongation, and is excellent in terms of strength and electrical conductivity.

<Example 2>

A copper wire rod ($\phi$27 mm) having a composition shown in Table 7 was manufactured using the continuous casting rolling facility shown in FIG. 2.

Next, a heat solution treatment was carried out on this copper wire rod under conditions shown in Table 7 using an air atmosphere furnace.

Cold wire drawing (working ratio: 77%) was carried out on the solution material after the heat solution treatment, thereby obtaining a copper wire material.

In addition, an aging heat treatment was carried out on this copper wire material under conditions shown in Table 7 using the air atmosphere furnace.

Next, cold wire drawing was carried out on the aging-heat-treated material so that the total working ratio from the copper wire rod reached 81%.

(Strength)

A test specimen having a shape specified by JIS Z2241 was sampled from a copper alloy trolley wire, and a tensile test was carried out at room temperature, thereby evaluating the tensile strength. The evaluation results are shown in Table 8.

(Electrical conductivity)

The electrical conductivity of the copper alloy trolley wire was measured using a four-terminal method. The evaluation results are shown in Table 8.

(Wire Drawability)

Cold wire drawing of a working ratio of 99% was carried out on the above-described copper wire rod, thereby working the copper wire rod to a copper wire material having a diameter of 1 mm. The number of times of wire breaking when the copper wire material was drawn until the drawn wire length reached 500 m in a diameter of 1 mm was evaluated, and an equivalent value of the number of times of wire breaking occurring per 10 m was considered as the wire drawability. The evaluation results are shown in Table 8.

(Hardness)

A test specimen was sampled from the obtained copper alloy trolley wire, polished using emery paper and a buff, and etched with an etchant, and the Vickers hardness was measured using a method specified by JIS Z 2244. The measurement was carried out five times, and the average value and the standard deviation were computed. The evaluation results are shown in Table 8. Meanwhile, in a related art example, the alloy composition significantly differed, and thus the hardness was not measured.

(Average Crystal Grain Size)

A test specimen was sampled from the obtained copper alloy trolley wire, polished using emery paper and a buff, etched with an etchant, and then observed using an optical microscope, and the average crystal grain size was computed using the area method specified by JIS H0321, the evaluation results are shown in Table 8. Meanwhile, in the related art example, the alloy composition significantly differed, and thus the average crystal grain size was not measured.

(Laboratory Fatigue Characteristics)

A sheet material having a width of 10 mm and a thickness of 4 mm was cut out from the solution material after the heat solution treatment, and cold rolling of a working ratio of 50% was carried out so as to obtain a thickness of 2 mm. After that, an aging heat treatment was carried out under conditions shown in Table 7 using the air atmosphere furnace, cold rolling of a working ratio of 75% was carried out so as to obtain a thickness of 0.5 mm, and the sheet material was cut to a length of 60 mm using a jaw. In addition, burrs on an end surface of the obtained test specimen were removed using emery paper No. 1500.

In addition, the test specimen was set in a thin sheet fatigue tester with a set length of 30 mm according to Measuring Method of Fatigue Property of Thin Sheets and Strips by Japanese Copper and Brass Association (JCBA T308: 2002). In addition, the number of times of vibration generated until breakage was measured by changing the strain amplitude at a frequency of 50 Hz.

The ratio of the amplitude amount to the set length of the test specimen was defined as the strain amplitude, and the laboratory fatigue characteristics were evaluated using the breakage service life under a condition of the strain amplitude being $6 \times 10^{-2}$. Specifically, a test specimen for which the number of times of vibration applied until breakage under the condition of the strain amplitude being $6 \times 10^{-2}$ was $10^7$ times or more was evaluated as "A", and a test specimen for which the number of times of vibration was less than $10^7$ times was evaluated as "B". The evaluation results are shown in Table 8.

(Fatigue Characteristics)

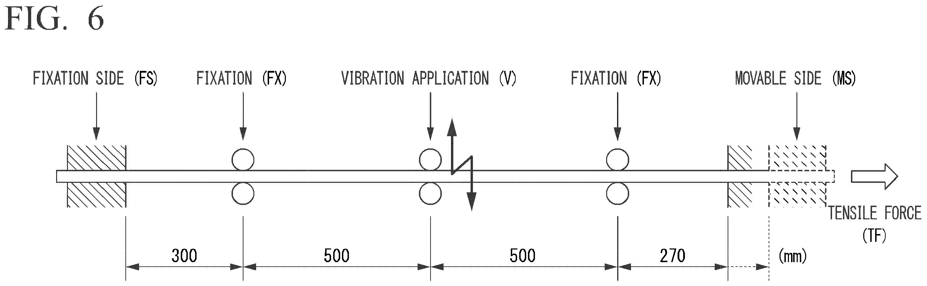

The fatigue characteristics of Invention Example 82, Comparative Example 71, and the related art example were evaluated using a testing device shown in FIG. 6. As shown in FIG. 6, both ends (fixation side (FS) and movable side (MS)) of the copper alloy trolley wire were fixed (FX), a tensile force (TF) was imparted, vibration was applied (V) to a longitudinal-direction central portion of the copper alloy trolley wire, and the number of times of vibration applied until breakage was considered as the fatigue service life (times). The evaluation results are shown in Table 8.

(Wear Characteristics)

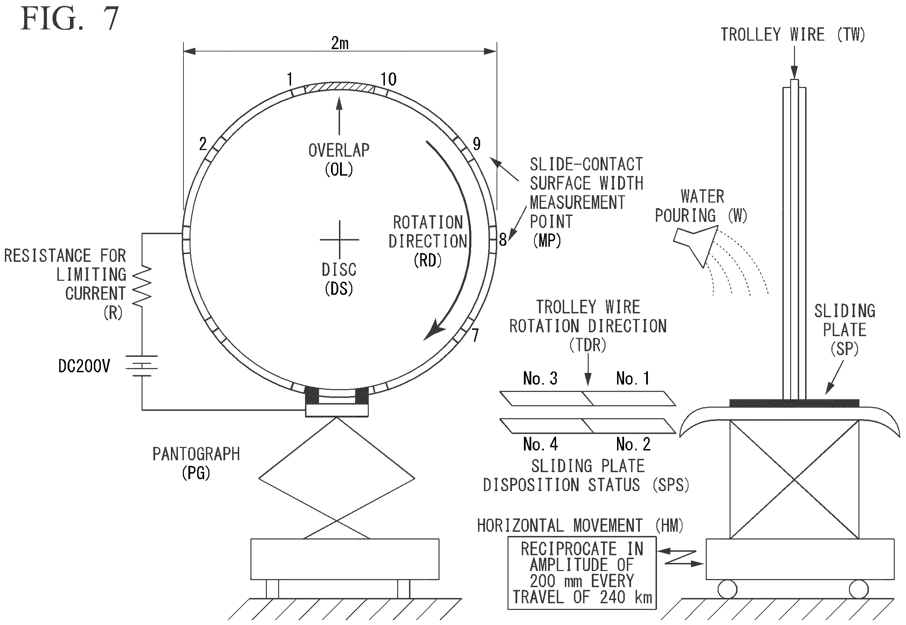

The wear characteristics of a copper alloy trolley wire (TW) were evaluated using a testing device shown in FIG. 7. The copper alloy trolley wire was wound around an outer circumferential surface of a disc (DS) and caused to slide into contact with a sliding plate (SP) (template: T3-2) of a pantograph (PG) by rotating the disc. Meanwhile, the pantograph was moved in a direction orthogonal to a rotation direction (RD) of the disc (horizontal movement (HM)) in an amplitude of 200 mm every slide-contact length of the copper alloy trolley wire (TW) of 240 m.

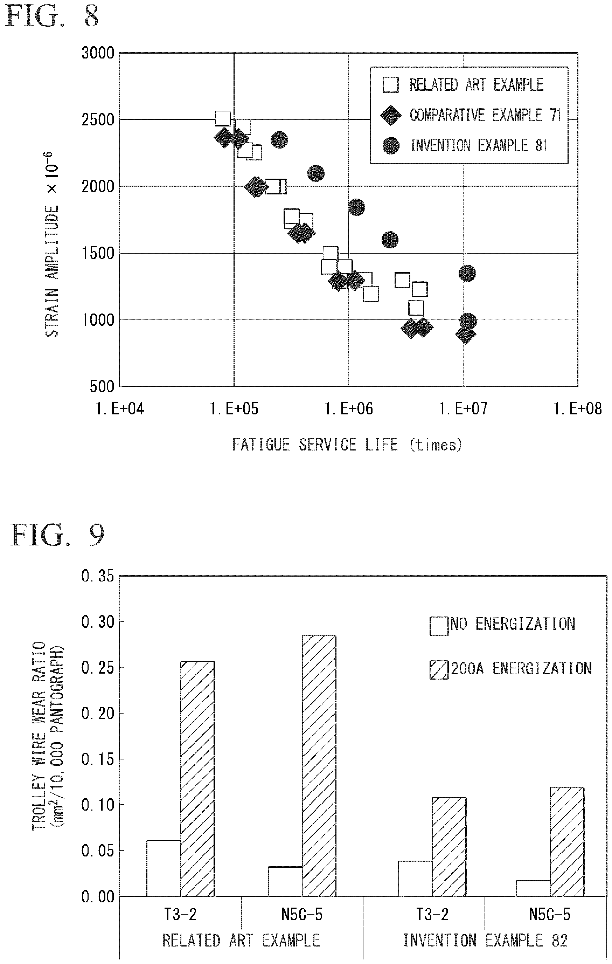

The measurement results of the wear ratios of the trolley wires (TW) measured by carrying out a wear test in Invention Example 82 and the related art example using two kinds of sliding plates (SP) (templates: T3-2 and N5C-5) under two conditions of no energization (no water pouring (W)) and an energization current of 200 A (with water pouring (W)) are shown in FIG. 9. Meanwhile, the sliding rate is 200 km/hour, and the test time is two hours.

[Table 7]

| | | Alloy component composition | | | | | | | Heat solution treatment step | | Aging heat treatment step | |
|---|---|---|---|---|---|---|---|---|---|---|---|---|
| | | Co (mass%) | P (mass%) | Sn (mass%) | B (massppm) | Cr (massppm) | Zr (massppm) | Cu | Temperature (°C) | Time (min) | Temperature (°C) | Time (min) |
| Invention Example | 71 | 0.30 | 0.11 | 0.04 | 6 | 0 | 0 | Balance | 930 | 120 | 500 | 300 |
| | 72 | 0.30 | 0.11 | 0.04 | 20 | 0 | 0 | Balance | 930 | 120 | 500 | 300 |
| | 73 | 0.30 | 0.11 | 0.04 | 900 | 0 | 0 | Balance | 930 | 120 | 500 | 300 |
| | 74 | 0.30 | 0.11 | 0.04 | 0 | 80 | 0 | Balance | 930 | 120 | 500 | 300 |
| | 75 | 0.30 | 0.11 | 0.04 | 0 | 0 | 100 | Balance | 930 | 120 | 500 | 300 |
| | 76 | 0.12 | 0.11 | 0.04 | 20 | 0 | 0 | Balance | 930 | 120 | 500 | 300 |
| | 77 | 0.40 | 0.11 | 0.04 | 20 | 0 | 0 | Balance | 930 | 120 | 500 | 300 |
| | 78 | 0.30 | 0.04 | 0.04 | 20 | 0 | 0 | Balance | 930 | 120 | 500 | 300 |
| | 79 | 0.30 | 0.16 | 0.04 | 20 | 0 | 0 | Balance | 930 | 120 | 500 | 300 |
| | 80 | 0.30 | 0.11 | 0.01 | 20 | 0 | 0 | Balance | 930 | 120 | 500 | 300 |
| | 81 | 0.30 | 0.11 | 0.50 | 20 | 0 | 0 | Balance | 930 | 120 | 500 | 300 |
| | 82 | 0.29 | 0.11 | 0.05 | 17 | 0 | 0 | Balance | 930 | 120 | 500 | 300 |
| | 83 | 0.31 | 0.11 | 0.50 | 18 | 0 | 0 | Balance | 1000 | 30 | 600 | 60 |
| | 84 | 0.31 | 0.11 | 0.50 | 18 | 0 | 0 | Balance | 900 | 600 | 450 | 60 |
| | 85 | 0.31 | 0.11 | 0.50 | 18 | 0 | 0 | Balance | 1000 | 60 | 300 | 1500 |
| | 86 | 0.31 | 0.11 | 0.50 | 18 | 0 | 0 | Balance | 950 | 600 | 450 | 1500 |
| Comparative Example | 71 | 0.30 | 0.11 | 0.05 | 0 | 0 | 0 | Balance | 930 | 120 | 500 | 300 |
| Related Art Example | | Cr: 0.35 mass%, Zr: 0.1 mass%, Si: 0.03 mass% | | | | | | Balance | 960 | 120 | 500 | 300 |

[Table 8]

| | | Drawability (times/10 m) | Strength (MPa) | Conductivity (%IACS) | Hardness (HV) | Standard deviation of hardness (HV) | Average crystal grain size (μm) | Laboratory fatigue characteristics (times) |
|---|---|---|---|---|---|---|---|---|
| Invention Example | 71 | 0.0 | 550 | 78.1 | 190 | 4.2 | 110 | A |
| | 72 | 0.0 | 554 | 78.0 | 194 | 3.6 | 70 | A |
| | 73 | 0.0 | 556 | 77.1 | 197 | 5.2 | 70 | A |
| | 74 | 0.3 | 556 | 78.1 | 195 | 1.3 | 170 | A |
| | 75 | 1.1 | 560 | 78.5 | 196 | 4.5 | 350 | A |
| | 76 | 1.1 | 545 | 80.2 | 188 | 3.3 | 70 | A |
| | 77 | 1.3 | 561 | 76.9 | 195 | 2.9 | 70 | A |
| | 78 | 1.3 | 546 | 80.5 | 184 | 1.6 | 70 | A |
| | 79 | 1.4 | 559 | 76.4 | 193 | 6.1 | 70 | A |
| | 80 | 1.2 | 554 | 79.5 | 190 | 5.5 | 70 | A |
| | 81 | 1.2 | 558 | 77.1 | 192 | 4.2 | 70 | A |
| | 82 | 0.0 | 552 | 77.9 | 191 | 4.1 | 70 | A |
| | 83 | 0.0 | 545 | 81.2 | 185 | 3.3 | 90 | A |
| | 84 | 0.0 | 546 | 82.1 | 183 | 1.2 | 70 | A |
| | 85 | 0.0 | 545 | 76.3 | 186 | 3.8 | 90 | A |
| | 86 | 0.0 | 546 | 77.2 | 185 | 3.9 | 80 | A |
| Comparative Example | 71 | 9.5 | 539 | 78.3 | 178 | 11.6 | 1100 | B |
| Related Art Example | | 0.0 | 550 | 79.0 | - | - | - | B |

* Laboratory fatigue characteristics: the number of times of vibration applied at a strain amplitude ($6\times10^{-2}$) until breakage
A: $10^7$ times or more, B: less than $10^7$ times

In the invention examples, the wire drawability, the strength, and the electrical conductivity were excellent. In addition, the hardness was higher than in the comparative examples, and the standard deviation also became small. In addition, the average crystal grain size became smaller than in the comparative examples. In addition, as a result of the laboratory fatigue characteristics evaluation, the laboratory fatigue characteristics were more favorable than in the comparative examples and the related art example.

Furthermore, as a result of evaluating the fatigue characteristics and the wear characteristics using the measurement devices shown in FIG. 6 and FIG. 7, it was confirmed that, in Invention Example 82 in which the hardness was high and the average crystal grain size was small, the trolley wire was more favorable than the trolley wire (PHC trolley wire) of the related art example.

In addition, in Invention Examples 83 to 86, the conditions for the heat solid solution treatment step and the aging heat treatment step were changed, but it was confirmed that, if the conditions are in the ranges of the present invention, it is possible to manufacture a copper alloy trolley wire that is excellent in terms of wire drawability, strength, and electrical conductivity, has a high hardness and a decreased average crystal grain size, and is excellent in terms of fatigue characteristics and wear characteristics.

Based on what has been described above, it was confirmed that, according to the invention examples, it is possible to provide a copper alloy trolley wire that is excellent in terms of strength and electrical conductivity and is more favorable in terms of fatigue characteristics and wear characteristics than in the related art.

Industrial Applicability

According to the present invention, it becomes possible to provide a copper alloy which is excellent in terms of workability and high-temperature elongation and is excellent in terms of strength and electrical conductivity, a copper alloy ingot, a solid solution material of copper alloy, and a copper alloy trolley wire that is excellent in terms of wear characteristics and fatigue characteristics and a method of manufacturing a copper alloy trolley wire.

Reference Signs List

| | |
|---|---|
| 11 | TUNDISH |
| 12 | POURING NOZZLE |
| 13 | CASTING WHEEL |
| 14 | ENDLESS BELT |
| 15 | CLEANING AND COOLING DEVICE |
| 16 | FLAW DETECTOR |
| 21 | ROD-SHAPED COPPER ALLOY INGOT |
| 50 | COPPER WIRE ROD |
| A | MELTING FURNACE |
| B | HOLDING FURNACE |
| C | CASTING LAUNDER |
| D | BELT-WHEEL TYPE CONTINUOUS CASTING APPARATUS |
| E | CONTINUOUS ROLLING DEVICE |
| F | COILER |
| EC | ELECTROLYTIC COPPER |
| FS | FIXATION SIDE |
| FX | FIX |
| V | VIBRATION APPLICATION |
| MS | MOVABLE SIDE |
| TF | TENSILE FORCE |
| R | RESISTANCE FOR LIMITING CURRENT |
| PG | PANTOGRAPH |
| OL | OVERLAP |
| DS | DISC |
| RD | ROTATION DIRECTION |
| MP | SLIDE-CONTACT SURFACE WIDTH MEASUREMENT POINT |
| TRD | TROLLEY WIRE ROTATION DIRECTION |
| SPS | SLIDING PLATE STATUS |
| HM | HORIZONTAL MOVEMENT |

W        WATER POURING
TW      TROLLEY WIRE
SP       SLIDING PLATE

**Claims**

1.  A copper alloy having a composition including:
    0.05 mass% or more and 0.70 mass% or less of Co; 0.02 mass% or more and 0.20 mass% or less of P; 0.005 mass% or more and 0.70 mass% or less of Sn; one or more of B, Cr, and Zr; and a Cu balance containing inevitable impurities,
    wherein X, Y, and Z satisfy the following Expressions (1) and (2),

$$\text{Expression (1): } 1 \leq (X/5) + (Y/50) + (Z/100),$$

$$\text{Expression (2): } X + Y + Z \leq 1{,}000,$$

    in a case where an amount of B is represented by X (massppm), an amount of Cr is represented by Y (massppm), and an amount of Zr is represented by Z (massppm).

2.  The copper alloy according to Claim 1,
    wherein X and Y satisfy the following Expressions (3) and (4),

$$\text{Expression (3): } 1 \leq (2X/5) + (2Y/50),$$

$$\text{Expression (4): } Y < 400.$$

3.  The copper alloy according to Claim 1 or 2,
    wherein the amount of B is in a range of 5 massppm or more and 1,000 massppm or less.

4.  The copper alloy according to any one of Claims 1 to 3, the composition of the copper alloy further including either or both of:

    0.01 mass% or more and 0.15 mass% or less of Ni; and
    0.005 mass% or more and to 0.07 mass% or less of Fe.

5.  The copper alloy according to any one of Claims 1 to 4, the composition of the copper alloy further including any one or more of:

    0.002 mass% or ,more and 0.5 mass%;or less of Zn;
    0.002 mass% or more and 0.25 mass% or less of Mg; and
    0.002 mass% or more and 0.25 mass% or less of Ag.

6.  A copper alloy ingot having the composition of the copper alloy according to any one of Claims 1 to 5,
    wherein an average crystal grain size after cold rolling of a working ratio of 50% and a heat treatment at 950°C for one hour is 400 $\mu$m or less.

7.  The copper alloy ingot according to Claim 6,
    wherein an electrical conductivity after the heat treatment at 950°C for one hour is 45%IACS or less.

8.  A solution material of a copper alloy having the composition of the copper alloy according to any one of Claims 1 to 5,
    wherein an electrical conductivity is 45%IACS or less.

9. A copper alloy trolley wire having a composition including:

0.12 mass% or more and 0.40 mass% or less of Co; 0.04 mass% or more and 0.16 mass% or less of P; 0.01 mass% or more and 0.50 mass% or less of Sn; one or more of B, Cr, and Zr; and a Cu balance containing inevitable impurities, wherein X, Y, and Z satisfy the following Expressions (1) and (2),

$$\text{Expression (1): } 1 \leq (X/5) + (Y/50) + (Z/100),$$

$$\text{Expression (2): } X + Y + Z \leq 1{,}000,$$

in case where an amount of B is represented by X (massppm), an amount of Cr is represented by Y (massppm), and an amount of Zr is represented by Z (massppm).

10. The copper alloy trolley wire according to Claim 9,
wherein X and Y satisfy the following Expressions (3) and (4),

$$\text{Expression (3): } 1 \leq (2X/5) + (2Y/50),$$

$$\text{Expression (4): } Y < 400.$$

11. The copper alloy trolley wire according to Claim 9 or 10,
wherein the amount of B is in a range of 5 massppm or more and 1,000 massppm or less.

12. A method of manufacturing the copper alloy trolley wire according to any one of Claims 9 to 11, the method comprising:

a continuous casting and rolling step of continuously producing a copper wire rod;

a solid solution treatment step of carrying out a solution treatment on the copper wire rod obtained;

a primary cold working step of producing a copper wire material by carrying out cold working on a solution material after the solid solution treatment step;

an aging heat treatment step of carrying out an aging heat treatment on the copper wire material; and

a secondary cold working step of carrying out cold working on an aging heat-treated material after the aging heat treatment step,

wherein, in the solid solution treatment step, a holding temperature is set to be in a range of 900°C or more and 1,000°C or less, and a holding time at the holding temperature is set to be in a range of 30 minutes or more and 600 minutes or less, and

in the aging heat treatment step, a heat treatment temperature is set to be in a range of 300°C or more and 600°C or less, and a holding time at the heat treatment temperature is set to be in a range of 60 minutes or more and 1,500 minutes or less.

FIG. 1

```
┌─────────────────────────┐
│      CONTINUOUS         │ ── S01
│  CASTING ROLLING STEP   │
└─────────────────────────┘
            │
            ▼
┌─────────────────────────┐
│       SOLUTION          │ ── S02
│   TREATMENT STEP        │
└─────────────────────────┘
            │
            ▼
┌─────────────────────────┐
│   COLD WORKING STEP     │ ── S03
└─────────────────────────┘
            │
            ▼
┌─────────────────────────┐
│ AGING HEAT TREATMENT STEP│ ── S04
└─────────────────────────┘
            │
            ▼
   ( COPPER ALLOY MEMBER )
```

FIG. 2

ELECTRIC
COPPER
(EC)

# FIG. 3

| MELTING CASTING STEP | S11 |
| SOLUTION TREATMENT STEP | S12 |
| HOT WORKING STEP | S13 |
| COLD WORKING STEP | S14 |
| AGING HEAT TREATMENT STEP | S15 |

COPPER ALLOY MEMBER

FIG. 4

```
┌─────────────────────────┐
│      CONTINUOUS         │ ～ S21
│  CASTING ROLLING STEP   │
└─────────────────────────┘
            │
            ▼
┌─────────────────────────┐
│       SOLUTION          │ ～ S22
│   TREATMENT STEP        │
└─────────────────────────┘
            │
            ▼
┌─────────────────────────┐
│  PRIMARY COLD WORKING STEP │ ～ S23
└─────────────────────────┘
            │
            ▼
┌─────────────────────────┐
│  AGING HEAT TREATMENT STEP │ ～ S24
└─────────────────────────┘
            │
            ▼
┌─────────────────────────┐
│ SECONDARY COLD WORKING STEP │ ～ S25
└─────────────────────────┘
            │
            ▼
    ( COPPER ALLOY TROLLEY WIRE )
```

FIG. 5A

30mm

FIG. 5B

20mm

0. 5mm

70mm

5mm

FIG. 6

FIXATION SIDE (FS)    FIXATION (FX)    VIBRATION APPLICATION (V)    FIXATION (FX)    MOVABLE SIDE (MS)

TENSILE FORCE (TF)

| 300 | 500 | 500 | 270 | (mm) |

FIG. 7

EP 3 476 958 A1

FIG. 8

FIG. 9

## INTERNATIONAL SEARCH REPORT

| | International application No. |
|---|---|
| | PCT/JP2017/023164 |

### A. CLASSIFICATION OF SUBJECT MATTER

*C22C9/06*(2006.01)i, *C22C9/00*(2006.01)i, *C22C9/02*(2006.01)i, *C22C9/04* (2006.01)i, *C22C9/05*(2006.01)i, *H01B1/02*(2006.01)i, *B22D11/00*(2006.01)n, *B22D11/06*(2006.01)n, *B22D11/108*(2006.01)n, *B22D11/12*(2006.01)n,

According to International Patent Classification (IPC) or to both national classification and IPC

### B. FIELDS SEARCHED

Minimum documentation searched (classification system followed by classification symbols)
C22C9/00-9/10, C22F1/00-3/02, H01B1/02, B22D11/00, B22D11/06, B22D11/108, B22D11/12, B22D35/00

Documentation searched other than minimum documentation to the extent that such documents are included in the fields searched

| Jitsuyo Shinan Koho | 1922–1996 | Jitsuyo Shinan Toroku Koho | 1996–2017 |
|---|---|---|---|
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2009/107586 A1 (Mitsubishi Shindoh Co., Ltd.),<br>03 September 2009 (03.09.2009),<br>claims; paragraphs [0067], [0077]; table 2, alloy no.37<br>& US 2011/0100676 A1<br>claims; paragraphs [0080], [0094]; table 2, no.37<br>& EP 2246448 A1      & KR 10-2010-0068484 A<br>& CN 101932741 A | 1,4-9<br>2-3,10-12 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24 August 2017 (24.08.17) | 05 September 2017 (05.09.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2017/023164 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>A | JP 2015-004126 A  (Mitsubishi Materials Corp.),<br>08 January 2015 (08.01.2015),<br>claims; paragraph [0047]; table 1, invention<br>example 9<br>& US 2016/0122849 A1<br>claims; paragraph [0102]; table 1, no.9<br>& WO 2014/189103 A1      & EP 3006582 A1<br>& CN 105229181 A        & KR 10-2016-0013025 A | 1,4-9<br>2-3,10-12 |
| X<br>A | JP 63-317635 A  (The Furukawa Electric Co.,<br>Ltd.),<br>26 December 1988 (26.12.1988),<br>claims; page 3, upper left column, line 15 to<br>upper right column, line 1; page 3, lower right<br>column, lines 2 to 10; table 1, symbol E<br>(Family: none) | 1-8<br>9-12 |
| X<br>A | JP 2008-255379 A  (Kobelco & Materials Copper<br>Tube, Ltd.),<br>23 October 2008 (23.10.2008),<br>claims; paragraph [0056]; table 1, example no.7<br>(Family: none) | 5-8<br>1-4,9-12 |

Form PCT/ISA/210 (continuation of second sheet) (January 2015)

**INTERNATIONAL SEARCH REPORT**

| International application No. |
| --- |
| PCT/JP2017/023164 |

Continuation of A. CLASSIFICATION OF SUBJECT MATTER
(International Patent Classification (IPC))

*B22D35/00*(2006.01)n, *C22F1/00*(2006.01)n, *C22F1/08*(2006.01)n

(According to International Patent Classification (IPC) or to both national classification and IPC)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016124661 A
- JP 2017115427 A
- JP 2010212164 A
- JP 2009107586 W
- JP 2009119222 W
- JP H08157985 B
- JP 5773015 B
- JP 6027807 B